# EUROPEAN PATENT SPECIFICATION

(11) **EP 4 362 534 B1**
(45) Date of publication and mention of the grant of the patent: **09.09.2026**
(21) Application number: 22845075.5
(22) Date of filing: 23.06.2022
(51) Int. Cl.: H04W 24/02, H04L 5/00, H04B 7/185, H04W 56/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 19.07.2021 CN 202110813444
(43) Date of publication of application: 01.05.2024
(73) Proprietor: Huawei Technologies Co., Ltd., Shenzhen, Guangdong 518129 (CN)
(72) Inventor: CHEN, Ying, Shenzhen, Guangdong 518129 (CN); YANG, Ruonan, Shenzhen, Guangdong 518129 (CN); WANG, Jun, Shenzhen, Guangdong 518129 (CN)
(74) Representative: Epping - Hermann - Fischer
(86) International application number: PCT/CN2022/100615
(87) International publication number: WO 2023/000910

(56) References cited:
- CN-A- 112 153 733
- CN-A- 112 399 546
- CN-A- 113 115 431
- NOKIA ET AL: "Doppler Compensation, Uplink Timing Advance and Random Access in NTN", vol. RAN WG1, no. Reno, USA; 20191118 - 20191122, 9 November 2019 (2019-11-09), XP051823750, Retrieved from the Internet <URL:https://ftp.3gpp.org/tsg_ran/WG1_RL1/TSGR1_99/Docs/R1-1913017.zip> [retrieved on 20191109]
- MEDIATEK INC: "Timing relationship enhancements for NR-NTN", vol. RAN WG1, no. e-Meeting ;20200824 - 20200828, 7 August 2020 (2020-08-07), XP052346867, Retrieved from the Internet <URL:https://ftp.3gpp.org/tsg_ran/WG1_RL1/TSGR1_102-e/Docs/R1-2005495.zip> [retrieved on 20200807]
- LG ELECTRONICS: "Discussions on UL time and frequency synchronization enhancements in NTN", vol. RAN WG1, no. e-Meeting; 20201026 - 20201113, 24 October 2020 (2020-10-24), XP051946658, Retrieved from the Internet <URL:https://ftp.3gpp.org/tsg_ran/WG1_RL1/TSGR1_103-e/Docs/R1-2008411.zip> [retrieved on 20201024]
- HUAWEI, HISILICON: "Discussion on timing relationship enhancements for NTN", 3GPP DRAFT; R1-2104255, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20210510 - 20210527, 12 May 2021 (2021-05-12), Mobile Competence Centre ; 650, route des Lucioles ; F-06921 Sophia-Antipolis Cedex ; France , XP052010709

## Description

### TECHNICAL FIELD

This application relates to the field of wireless communication technologies, and in particular, to a communication method and apparatus.

### BACKGROUND

In comparison with terrestrial communication, satellite communication has unique advantages. For example, satellite communication can provide a wider coverage area and provide communication services for areas such as oceans, forests, and high altitudes that cannot be covered by terrestrial base stations. Satellite communication is similar to terrestrial communication. A coverage area of a beam of a terrestrial base station or a satellite base station is limited. Because distances between terminal devices at different locations of the beam and the terrestrial base station or the satellite base station are different, different delays are generated in a communication process.

Currently, in a communication process, due to a transmission delay, to ensure orthogonal transmission of uplink data of a plurality of terminal devices, the terminal devices need to send the uplink data based on different timing advances (timing advances, TAs). This process is referred to as an uplink timing advance process.

However, in comparison with terrestrial communication, a greatest characteristic of satellite communication is that a round-trip transmission delay is high, and a terminal device may frequently perform beam switching or cell handover due to movement of a satellite. As a result, a TA-related configuration manner in current terrestrial communication cannot be applied to satellite communication.

Therefore, how to determine a TA in a satellite communication process is an urgent technical problem to be resolved. 3GPP document R1-1913017 "Doppler Compensation, Uplink Timing Advance and Random Access in NTN" from Nokia, Nokia Shanghai Bell, 3GPP TSG RAN WG1 #99, Reno, USA, November 18th - 22nd, 2019, discloses that within a beam coverage, several reference points can be managed for common timing advance computation. Each reference point is associated with a timing advance and the reference points and associated timing advance are broadcast by gNB in a RAR message. In the random access procedure, after the RAR message is received, the UE transmits a Msg 3 message containing the uplink timing adjustment and the UE identity.

3GPP document R1-2005495 "Timing relationship enhancements for NR-NTN" from MediaTek Inc, 3GPP TSG RAN WG1 Meeting #102e, August 24th - 28th , 2020, discloses that for NR NTN Timing Relationships, Koffset is needed for UL grant of data on PUSCH after Msg3. This indication is beam specific and implicit as both the UE and gNB know the UE-specific TA within a beam since it has been reported in Msg3 during random access procedure. Over time, the connected UE may autonomously determine the TA due to the satellite time drift and report the TA to the gNB. The satellite or gNB times can be used as the reference point, for different reference points in a beam.

### SUMMARY

Embodiments of this application provide a communication method and a communication apparatus, to determine a TA between a first communication apparatus and a second communication apparatus based on TA information between the first communication apparatus and a target reference point, so as to determine TAs between different communication apparatuses in a satellite communication system. The present invention is defined by the attached set of claims.

A first aspect of embodiments of this application provides a communication method. The method is applied to a satellite communication system, and the satellite communication system includes at least a terminal device used as a first communication apparatus and a network device used as a second communication apparatus. Specifically, the method may be performed by a terminal device, or may be performed by a component (for example, a processor, a chip, or a chip system) of the terminal device. In the method, the first communication apparatus first determines a target reference point; the first communication apparatus determines information about a first TA, where the information about the first TA indicates TA information between the first communication apparatus and the target reference point; and then the first communication apparatus sends first information, where the first information includes the information about the first TA.

Based on the foregoing technical solution, the first information sent by the first communication apparatus includes the information that is about the first TA and that indicates the TA information between the first communication apparatus and the target reference point, so that a receiver of the first information (in this embodiment and subsequent embodiments, that the receiver of the first information is the second communication apparatus is used as an example) receives the information about the first TA. Then, the receiver of the first information determines a TA between the first communication apparatus and the second communication apparatus based on the information about the first TA. Therefore, when the first communication apparatus and the second communication apparatus are located in the satellite communication system, the TA between the first communication apparatus and the second communication apparatus is determined based on the TA information between the first communication apparatus and the target reference point, so as to determine TAs between different communication apparatuses in the satellite communication system.

In a possible implementation of the first aspect, the first information further includes information about the target reference point.

Based on the foregoing technical solution, the first information sent by the first communication apparatus further includes the information about the target reference point, so that the second communication apparatus uses the information that is about the target reference point and that is sent by the first communication apparatus as one of bases for determining the TA between the first communication apparatus and the second communication apparatus. In a possible implementation of the first aspect, the information about the first TA and the information about the target reference point are carried in a first message, where the first message is a message 3 (message 3) or a message A (message A); or the information about the first TA and the information about the target reference point are carried in different messages.

Based on the foregoing technical solution, when the first information sent by the first communication apparatus includes the information about the first TA and the information about the target reference point, the information about the first TA and the information about the target reference point may be carried in a same message, so that the second communication apparatus determines the two pieces of information in the same message, to save communication resources and improve communication efficiency. Alternatively, the information about the first TA and the information about the target reference point may be carried in different messages, so that the second communication apparatus separately determines the two pieces of information in the different messages, to improve flexibility of implementing the solution.

In a possible implementation of the first aspect, before the first communication apparatus sends the information about the target reference point, the method further includes: The first communication apparatus first sends a first request message, where the first request message is used to request to report the information about the target reference point; and the first communication apparatus receives a first response message, where the first response message indicates that reporting of the information about the target reference point is allowed.

Based on the foregoing technical solution, the first communication apparatus may trigger sending of the information about the target reference point based on interaction between the first request message and the first response message, so that the second communication apparatus can determine the target reference point associated with the information about the first TA; and when determining, based on the information about the first TA, the TA between the first communication apparatus and the second communication apparatus, use the information about the target reference point as one of bases of the determining process.

In a possible implementation of the first aspect, that the first communication apparatus sends the first request message when at least one of the following conditions is satisfied includes:
a moving speed of the first communication apparatus is greater than a first threshold;
the first communication apparatus determines that beam switching occurs; or
the first communication apparatus determines that cell handover occurs.

Based on the foregoing technical solution, when at least one of the foregoing conditions is satisfied, the first communication apparatus determines that a communication delay between the first communication apparatus and the second communication apparatus needs to be updated, so that the first communication apparatus sends the first request message requesting to report the information about the target reference point, and the second communication apparatus can perform, based on the first request message, a process of determining the TA between the first communication apparatus and the second communication apparatus.

In a possible implementation of the first aspect, a process in which the first communication apparatus sends the first information specifically includes: The first communication apparatus first receives first configuration information, where the first configuration information is used for configuring a sending policy of the first information; and then, the first communication apparatus sends the first information based on the first configuration information.

Based on the foregoing technical solution, the first communication apparatus may send the information about the target reference point to the second communication apparatus based on the first configuration information from the second communication apparatus, so that the second communication apparatus receives the information about the target reference point according to the sending policy, and uses the information about the target reference point as one of bases for determining the TA between the first communication apparatus and the second communication apparatus. Optionally, the first configuration information is pre-configured in the first communication apparatus.

In a possible implementation of the first aspect, when a moving speed of the first communication apparatus is greater than a second threshold, the first communication apparatus sends a second request message, where the second request message is used to request to update the first configuration information; and
the first communication apparatus receives third configuration information, where the third configuration information is updated configuration information.

Based on the foregoing technical solution, when the moving speed of the first communication apparatus is greater than the second threshold, the first communication apparatus determines that a communication delay between the first communication apparatus and the second communication apparatus may need to be updated, so that the first communication apparatus may send the second request message, to receive the updated configuration information.

In a possible implementation of the first aspect, the sending policy includes at least one of a sending frequency of the first information, a sending periodicity of the first information, a time domain resource carrying the first information, and a frequency domain resource carrying the first information.

Based on the foregoing technical solution, the first configuration information that is from the second communication apparatus and that is used for configuring the sending policy of the first information may be specifically implemented by using the plurality of sending policies, so that the first communication apparatus sends the first information based on the first configuration information.

In a possible implementation of the first aspect, the information about the target reference point is three-dimensional coordinate system information, longitude and latitude coordinate system information, or index information.

Based on the foregoing technical solution, the information about the target reference point specifically indicates the target reference point. The first communication apparatus may indicate the target reference point to the second communication apparatus in the foregoing plurality of manners.

In a possible implementation of the first aspect, before that a first communication apparatus determines a target reference point, the method further includes: The first communication apparatus receives second configuration information, where the second configuration information is used for configuring a set of reference points, and the set of reference points includes the target reference point.

Based on the foregoing technical solution, the first communication apparatus may send the information about the target reference point to the second communication apparatus after determining the target reference point in the set of reference points based on the second configuration information from the second communication apparatus, so that the second communication apparatus receives the information about the target reference point in a subsequent process, and uses the information about the target reference point as one of bases for determining the TA between the first communication apparatus and the second communication apparatus.

In a possible implementation of the first aspect, the information about the first TA includes at least one of the following: an offset between the first TA and a second TA, where the first TA is a TA between the first communication apparatus and the second communication apparatus, and the second TA is a TA between the target reference point and the second communication apparatus; or an offset between Koffset corresponding to the first TA and Koffset corresponding to the second TA.

Based on the foregoing technical solution, the information that is about the first TA and that indicates the TA information between the first communication apparatus and the target reference point may be implemented in the foregoing plurality of manners, to improve implementation flexibility of sending the information about the first TA by the first communication apparatus.

In a possible implementation of the first aspect, both a TA type of the first TA and a TA type of the second TA are service link side TAs.

Based on the foregoing technical solution, in a satellite communication process, the TA between the first communication apparatus and the second communication apparatus includes at least the service link side TA and a common link side TA. Because a value of the common link side TA is generally a value that can be obtained in advance by the second communication apparatus, an implementation in which the first communication apparatus sends only the service link side TA can enable the second communication apparatus to determine the TA between the first communication apparatus and the second communication apparatus, to reduce communication resource consumption and improve communication efficiency.

Optionally, both the TA type of the first TA and the TA type of the second TA include the service link side TA and the common link side TA.

In a possible implementation of the first aspect, the method further includes: The first communication apparatus sends a change rate of the information about the first TA.

Based on the foregoing technical solution, in addition to sending the information about the first TA, the first communication apparatus further sends the change rate of the information about the first TA. Therefore, after receiving the information about the first TA, the second communication apparatus can derive a TA between the first communication apparatus and the second communication apparatus in a specific time period based on the information about the first TA and the change rate of the information about the first TA.

In a possible implementation of the first aspect, the information about the first TA and the change rate of the information about the first TA are carried in a second message; or the information about the first TA and the change rate of the information about the first TA are carried in different messages.

Based on the foregoing technical solution, when the first communication apparatus sends the information about the first TA and the change rate of the information about the first TA, the information about the first TA and the change rate of the information about the first TA may be carried in a same message, so that the second communication apparatus determines the two pieces of information in the same message, to save communication resources and improve communication efficiency. Alternatively, the information about the first TA and the change rate of the information about the first TA may be carried in different messages, so that the second communication apparatus separately determines the two pieces of information in the different messages, to improve flexibility of implementing the solution.

In a possible implementation of the first aspect, a length of valid duration of the change rate of the information about the first TA is positively correlated with an absolute value of a first angle, where the first angle is a cell/beam elevation angle between the first communication apparatus and the second communication apparatus.

Optionally, a value range of the absolute value of the first angle is 0° to 90°.

Based on the foregoing technical solution, the change rate of the information about the first TA is associated with a communication cell (for example, whether the first communication apparatus is located at a cell edge)/a communication beam (for example, whether the first communication apparatus is located at a beam edge) between the first communication apparatus and the second communication apparatus. A larger absolute value of the cell/beam elevation angle between the first communication apparatus and the second communication apparatus indicates a lower communication delay between the first communication apparatus and the second communication apparatus; and therefore, the valid duration of the change rate of the information that is about the first TA and that is sent by the first communication apparatus is longer. A smaller absolute value of the cell/beam elevation angle between the first communication apparatus and the second communication apparatus indicates a higher communication delay between the first communication apparatus and the second communication apparatus; and therefore, the valid duration of the change rate of the information that is about the first TA and that is sent by the first communication apparatus is shorter. In a possible implementation of the first aspect, that the first communication apparatus sends a change rate of the information about the first TA includes: The first communication apparatus first receives fourth configuration information, where the fourth configuration information is used for configuring a sending policy of the change rate of the information about the first TA; and then the first communication apparatus sends the change rate of the information about the first TA based on the fourth configuration information.

Based on the foregoing technical solution, the first communication apparatus may send the change rate of the information about the first TA to the second communication apparatus based on the fourth configuration information from the second communication apparatus, so that the second communication apparatus receives the change rate of the information about the first TA according to the sending policy, and uses the change rate of the information about the first TA as one of bases for determining the TA between the first communication apparatus and the second communication apparatus.

Optionally, the fourth configuration information is pre-configured in the first communication apparatus.

In a possible implementation of the first aspect, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus, where that the first communication apparatus sends the change rate of the information about the first TA based on the fourth configuration information includes: The first communication apparatus sends the change rate of the information about the first TA based on the speed of the first communication apparatus and the fourth configuration information.

Based on the foregoing technical solution, in a process in which the first communication apparatus sends the change rate of the information about the first TA, the first communication apparatus can determine, based on the speed of the first communication apparatus, the sending periodicity of the corresponding change rate of the information about the first TA in the at least two pieces of configuration information included in the fourth configuration information, and send the change rate of the information about the first TA.

A second aspect of embodiments of this application provides a communication method. The method is applied to a satellite communication system, and the satellite communication system includes at least a terminal device used as a first communication apparatus and a network device used as a second communication apparatus. Specifically, the method may be performed by a network device, or may be performed by a component (for example, a processor, a chip, or a chip system) of the network device. In the method, the second communication apparatus first receives first information, where the first information includes information about a first timing advance TA, and the information about the first TA indicates TA information between the first communication apparatus and a target reference point; and then the second communication apparatus determines a TA between the second communication apparatus and the first communication apparatus based on the first information.

Based on the foregoing technical solution, the first information received by the second communication apparatus includes the information that is about the first TA and that indicates the TA information between the first communication apparatus and the target reference point. Then, the second communication apparatus determines the TA between the first communication apparatus and the second communication apparatus based on the information about the first TA. Therefore, when the first communication apparatus and the second communication apparatus are located in the satellite communication system, the second communication apparatus can determine the TA between the first communication apparatus and the second communication apparatus based on the TA information between the first communication apparatus and the target reference point, so as to determine TAs between different communication apparatuses in the satellite communication system.

In a possible implementation of the second aspect, the method further includes: The first information further includes information about the target reference point.

Based on the foregoing technical solution, the first information received by the second communication apparatus further includes the information about the target reference point, so that the second communication apparatus uses the information that is about the target reference point and that is sent by the first communication apparatus as one of bases for determining the TA between the first communication apparatus and the second communication apparatus.

In a possible implementation of the second aspect, the information about the first TA and the information about the target reference point are carried in a first message, where the first message is a message 3 or a message A; or the information about the first TA and the information about the target reference point are carried in different messages. Based on the foregoing technical solution, when the first information received by the second communication apparatus includes the information about the first TA and the information about the target reference point, the information about the first TA and the information about the target reference point may be carried in a same message, so that the second communication apparatus determines the two pieces of information in the same message, to save communication resources and improve communication efficiency. Alternatively, the information about the first TA and the information about the target reference point may be carried in different messages, so that the second communication apparatus separately determines the two pieces of information in the different messages, to improve flexibility of implementing the solution.

In a possible implementation of the second aspect, before that the second communication apparatus receives first information, the method further includes: The second communication apparatus first receives the first request message, where the first request message is used to request to report the information about the target reference point; and then the second communication apparatus sends a first response message, where the first response message indicates that reporting of the information about the target reference point is allowed.

Based on the foregoing technical solution, the first communication apparatus may trigger sending of the information about the target reference point based on interaction between the first request message and the first response message, so that the second communication apparatus can determine the target reference point associated with the information about the first TA; and when determining, based on the information about the first TA, the TA between the first communication apparatus and the second communication apparatus, use the information about the target reference point as one of bases of the determining process.

In a possible implementation of the second aspect, before that the second communication apparatus receives first information, the method further includes: The second communication apparatus sends first configuration information, where the first configuration information is used for configuring a sending policy of the first information.

Based on the foregoing technical solution, after the second communication apparatus sends the first configuration information, the first communication apparatus sends the information about the target reference point to the second communication apparatus based on the first configuration information, so that the second communication apparatus receives the information about the target reference point according to the sending policy, and uses the information about the target reference point as one of bases for determining the TA between the first communication apparatus and the second communication apparatus.

In a possible implementation of the second aspect, the sending policy includes at least one of a sending frequency of the first information, a sending periodicity of the first information, a time domain resource carrying the first information, and a frequency domain resource carrying the first information.

Based on the foregoing technical solution, the first configuration information that is sent by the second communication apparatus and that is used for configuring the sending policy of the first information may be specifically implemented by using the plurality of sending policies, so that the first communication apparatus sends the first information based on the first configuration information.

In a possible implementation of the second aspect, the information about the target reference point is three-dimensional coordinate system information, longitude and latitude coordinate system information, or index information.

Based on the foregoing technical solution, the information about the target reference point specifically indicates the target reference point, so that the first communication apparatus may indicate the target reference point to the second communication apparatus in the foregoing plurality of manners.

In a possible implementation of the second aspect, before that the second communication apparatus receives first information, the method further includes: The second communication apparatus sends second configuration information, where the second configuration information is used for configuring a set of reference points, and the set of reference points includes the target reference point.

Based on the foregoing technical solution, the second configuration information sent by the second communication apparatus is used for configuring the set of reference points, so that the first communication apparatus sends the information about the target reference point to the second communication apparatus after determining the target reference point in the set of reference points. Then, after receiving the information about the target reference point based on the second configuration information, the second communication apparatus uses the information about the target reference point as one of bases for determining the TA between the first communication apparatus and the second communication apparatus.

In a possible implementation of the second aspect, the information about the first TA includes at least one of the following: an offset between the first TA and a second TA, where the first TA is a TA between the first communication apparatus and the second communication apparatus, and the second TA is a TA between the target reference point and the second communication apparatus; or an offset between Koffset corresponding to the first TA and Koffset corresponding to the second TA.

Based on the foregoing technical solution, the information that is about the first TA and that indicates the TA information between the first communication apparatus and the target reference point may be implemented in the foregoing plurality of manners, to improve implementation flexibility of sending the information about the first TA by the first communication apparatus.

In a possible implementation of the second aspect, both a TA type of the first TA and a TA type of the second TA are service link side TAs.

Based on the foregoing technical solution, in a satellite communication process, the TA between the first communication apparatus and the second communication apparatus includes at least the service link side TA and a common link side TA. Because a value of the common link side TA is generally a value that can be obtained in advance by the second communication apparatus, an implementation in which the first communication apparatus sends only the service link side TA can enable the second communication apparatus to determine the TA between the first communication apparatus and the second communication apparatus, to reduce communication resource consumption and improve communication efficiency.

Optionally, both the TA type of the first TA and the TA type of the second TA include the service link side TA and the common link side TA.

In a possible implementation of the second aspect, the method further includes: The second communication apparatus receives a change rate of the information about the first TA.

Based on the foregoing technical solution, in addition to receiving the information about the first TA, the second communication apparatus further receives the change rate of the information about the first TA. Therefore, after receiving the information about the first TA, the second communication apparatus can derive a TA between the first communication apparatus and the second communication apparatus in a specific time period based on the information about the first TA and the change rate of the information about the first TA.

In a possible implementation of the second aspect, the information about the first TA and the change rate of the information about the first TA are carried in a second message; or the information about the first TA and the change rate of the information about the first TA are carried in different messages.

Based on the foregoing technical solution, when the second communication apparatus receives the information about the first TA and the change rate of the information about the first TA, the information about the first TA and the change rate of the information about the first TA may be carried in a same message, so that the second communication apparatus determines the two pieces of information in the same message, to save communication resources and improve communication efficiency. Alternatively, the information about the first TA and the change rate of the information about the first TA may be carried in different messages, so that the second communication apparatus separately determines the two pieces of information in the different messages, to improve flexibility of implementing the solution.

In a possible implementation of the second aspect, a length of valid duration of the change rate of the information about the first TA is positively correlated with an absolute value of a first angle, where the first angle is a cell/beam elevation angle between the first communication apparatus and the second communication apparatus.

Optionally, a value range of the absolute value of the first angle is 0° to 90°.

Based on the foregoing technical solution, the change rate of the information about the first TA is associated with a communication cell (for example, whether the first communication apparatus is located at a cell edge)/a communication beam (for example, whether the first communication apparatus is located at a beam edge) between the first communication apparatus and the second communication apparatus. A larger absolute value of the cell/beam elevation angle between the first communication apparatus and the second communication apparatus indicates a lower communication delay between the first communication apparatus and the second communication apparatus; and therefore, the valid duration of the change rate of the information that is about the first TA and that is sent by the first communication apparatus is longer. A smaller absolute value of the cell/beam elevation angle between the first communication apparatus and the second communication apparatus indicates a higher communication delay between the first communication apparatus and the second communication apparatus; and therefore, the valid duration of the change rate of the information that is about the first TA and that is sent by the first communication apparatus is shorter. In a possible implementation of the second aspect, before that the second communication apparatus receives a change rate of the information about the first TA, the method further includes: The second communication apparatus sends fourth configuration information, where the fourth configuration information is used for configuring a sending policy of the change rate of the information about the first TA.

Based on the foregoing technical solution, the second communication apparatus sends the fourth configuration information, so that the first communication apparatus sends the change rate of the information about the first TA based on the fourth configuration information. Then, after receiving the change rate of the information about the first TA according to the sending policy, the second communication apparatus uses the change rate of the information about the first TA as one of bases for determining the TA between the first communication apparatus and the second communication apparatus.

In a possible implementation of the second aspect, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus.

Based on the foregoing technical solution, the fourth configuration information sent by the second communication apparatus includes the at least two pieces of configuration information, so that the first communication apparatus may determine, based on the speed of the first communication apparatus, the sending periodicity of the change rate of the corresponding information about the first TA in the at least two pieces of configuration information included in the fourth configuration information, and send the change rate of the information about the first TA.

A third aspect of embodiments of this application provides a communication method. The method is applied to a satellite communication system, and the satellite communication system includes at least a terminal device used as a first communication apparatus and a network device used as a second communication apparatus. Specifically, the method may be performed by a terminal device, or may be performed by a component (for example, a processor, a chip, or a chip system) of the terminal device. In the method, the first communication apparatus first determines a first timing advance TA parameter and a change rate of the first TA parameter, where the first TA parameter indicates a TA between the first communication apparatus and the second communication apparatus; and then the first communication apparatus sends a first message, where the first message includes the first TA parameter and the change rate of the first TA parameter.

Based on the foregoing technical solution, the first message sent by the first communication apparatus includes the first TA parameter and the change rate of the first TA parameter, so that a receiver of the first message (in this embodiment and subsequent embodiments, that the receiver of the first message is the second communication apparatus is used as an example) receives the first message. Then, the receiver of the first message determines the TA between the first communication apparatus and the second communication apparatus based on the first TA parameter and the change rate of the first TA parameter. Therefore, when the first communication apparatus and the second communication apparatus are located in the satellite communication system, the TA between the first communication apparatus and the second communication apparatus is determined based on the first TA parameter and the change rate of the first TA parameter that are sent by the first communication apparatus, so as to determine TAs between different communication apparatuses in the satellite communication system.

In a possible implementation of the third aspect, a length of valid duration of the change rate of the first TA parameter is positively correlated with an absolute value of a first angle, where the first angle is a cell/beam elevation angle between the first communication apparatus and the second communication apparatus.

Optionally, a value range of the absolute value of the first angle is 0° to 90°.

Based on the foregoing technical solution, the change rate of the first TA parameter is associated with a communication cell (for example, whether the first communication apparatus is located at a cell edge)/a communication beam (for example, whether the first communication apparatus is located at a beam edge) between the first communication apparatus and the second communication apparatus. A larger absolute value of the cell/beam elevation angle between the first communication apparatus and the second communication apparatus indicates a lower communication delay between the first communication apparatus and the second communication apparatus; and therefore, the valid duration of the change rate of the first TA parameter and that is sent by the first communication apparatus is longer. A smaller absolute value of the cell/beam elevation angle between the first communication apparatus and the second communication apparatus indicates a higher communication delay between the first communication apparatus and the second communication apparatus; and therefore, the valid duration of the change rate of the first TA parameter and that is sent by the first communication apparatus is shorter.

In a possible implementation of the third aspect, that the first communication apparatus sends a first message includes: The first communication apparatus first receives first configuration information, where the first configuration information is used for configuring a sending policy of the first message, and then, the first communication apparatus sends the first message based on the first configuration information.

Based on the foregoing technical solution, the first communication apparatus may send the change rate of the first TA parameter to the second communication apparatus based on the first configuration information from the second communication apparatus, so that the second communication apparatus receives the change rate of the first TA parameter according to the sending policy, and uses the change rate of the first TA parameter as one of bases for determining the TA between the first communication apparatus and the second communication apparatus.

Optionally, the first configuration information is pre-configured in the first communication apparatus.

In a possible implementation of the third aspect, the sending policy includes a sending periodicity of the change rate of the first TA parameter, the first configuration information includes at least two pieces of configuration information, and each of the at least two pieces of configuration information includes an association relationship between the sending periodicity of the change rate of the first TA parameter and a speed of the first communication apparatus, where a process in which the first communication apparatus sends the change rate of the first TA parameter based on the first configuration information specifically includes: The first communication apparatus sends the change rate of the first TA parameter based on the speed of the first communication apparatus and the first configuration information. Based on the foregoing technical solution, in the process in which the first communication apparatus sends the change rate of the first TA parameter, the first communication apparatus can determine, based on the speed of the first communication apparatus, the change rate of the corresponding first TA parameter in the at least two pieces of configuration information included in the first configuration information, and send the change rate of the first TA parameter.

In a possible implementation of the third aspect, the first configuration information is used for configuring a first sending frequency of the first message, and after that the first communication apparatus receives first configuration information, the method further includes: The first communication apparatus receives second configuration information, where the second configuration information is used for configuring a second sending frequency of the first message, and the first sending frequency is different from the second sending frequency.

Based on the foregoing technical solution, an update process may further exist for the configuration information used for configuring the sending policy of the first message. The first communication apparatus may receive the second configuration information used for updating the first configuration information, and send the first message based on the second sending frequency configured by using the updated second configuration information.

In a possible implementation of the third aspect, the first sending frequency is greater than the second sending frequency.

Based on the foregoing technical solution, in time domain, a moment at which the first communication apparatus receives the first configuration information is before a moment at which the first communication apparatus receives the second configuration information. When the first communication apparatus accesses the second communication apparatus for the first time, the first communication apparatus sends the first message based on the larger first sending frequency, to ensure that the first communication apparatus accesses the second communication apparatus. Then, when a communication link between the first communication apparatus and the second communication apparatus is stable, the first communication apparatus sends the first message based on the smaller second sending frequency, to save communication resources.

In a possible implementation of the third aspect, the first TA parameter includes a TA value between the first communication apparatus and the second communication apparatus; or the first TA parameter includes Koffest corresponding to a TA value between the first communication apparatus and the second communication apparatus. In a possible implementation of the third aspect, the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment; the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or the first TA parameter includes a third differential value, and the third differential value indicates a difference between a common TA value between the first communication apparatus and the second communication apparatus and a TA value between the first communication apparatus and the second communication apparatus.

Based on the foregoing technical solution, in the first message, the first TA parameter indicating the TA between the first communication apparatus and the second communication apparatus may be implemented in the foregoing plurality of manners, to improve flexibility of implementing the solution.

In a possible implementation of the third aspect, a TA type of the first TA parameter is a service link side TA.

Based on the foregoing technical solution, in a satellite communication process, the TA between the first communication apparatus and the second communication apparatus includes at least the service link side TA and a common link side TA. Because a value of the common link side TA is generally a value that can be obtained in advance by the second communication apparatus, an implementation in which the first communication apparatus sends only the service link side TA can enable the second communication apparatus to determine the TA between the first communication apparatus and the second communication apparatus, to reduce communication resource consumption and improve communication efficiency.

Optionally, both a TA type of a first TA and a TA type of a second TA include the service link side TA and the common link side TA.

A fourth aspect of embodiments of this application provides a communication method. The method is applied to a satellite communication system, and the satellite communication system includes at least a terminal device used as a first communication apparatus and a network device used as a second communication apparatus. Specifically, the method may be performed by a network device, or may be performed by a component (for example, a processor, a chip, or a chip system) of the network device. In the method, the second communication apparatus first receives a first message, where the first message includes a first timing advance TA parameter and a change rate of the first TA parameter, and the first TA parameter indicates a TA between the first communication apparatus and the second communication apparatus; and then the second communication apparatus determines the TA between the first communication apparatus and the second communication apparatus based on the first message.

Based on the foregoing technical solution, the first message received by the second communication apparatus includes the first TA parameter and the change rate of the first TA parameter, and then, the second communication apparatus determines the TA between the first communication apparatus and the second communication apparatus based on the first TA parameter and the change rate of the first TA parameter. Therefore, when the first communication apparatus and the second communication apparatus are located in the satellite communication system, the second communication apparatus determines the TA between the first communication apparatus and the second communication apparatus based on the first TA parameter and the change rate of the first TA parameter that are sent by the first communication apparatus, so as to determine TAs between different communication apparatuses in the satellite communication system.

In a possible implementation of the fourth aspect, a length of valid duration of the change rate of the first TA parameter is positively correlated with an absolute value of a first angle, where the first angle is a cell/beam elevation angle between the first communication apparatus and the second communication apparatus.

Optionally, a value range of the absolute value of the first angle is 0° to 90°.

Based on the foregoing technical solution, the change rate of the first TA parameter is associated with a communication cell (for example, whether the first communication apparatus is located at a cell edge)/a communication beam (for example, whether the first communication apparatus is located at a beam edge) between the first communication apparatus and the second communication apparatus. A larger absolute value of the cell/beam elevation angle between the first communication apparatus and the second communication apparatus indicates a lower communication delay between the first communication apparatus and the second communication apparatus; and therefore, the valid duration of the change rate of the first TA parameter and that is sent by the first communication apparatus is longer. A smaller absolute value of the cell/beam elevation angle between the first communication apparatus and the second communication apparatus indicates a higher communication delay between the first communication apparatus and the second communication apparatus; and therefore, the valid duration of the change rate of the first TA parameter and that is sent by the first communication apparatus is shorter.

In a possible implementation of the fourth aspect, before that the second communication apparatus receives a first message, the method further includes: The second communication apparatus sends first configuration information, where the first configuration information is used for configuring a sending policy of the first message.

Based on the foregoing technical solution, the second communication apparatus further sends the first configuration information, and then the second communication apparatus receives the change rate of the first TA parameter from the first communication apparatus according to the sending policy of the first configuration information, and uses the change rate of the first TA parameter as one of bases for determining the TA between the first communication apparatus and the second communication apparatus.

In a possible implementation of the fourth aspect, the sending policy includes a sending periodicity of the change rate of the first TA parameter, the first configuration information includes at least two pieces of configuration information, and each of the at least two pieces of configuration information includes an association relationship between the change rate of the first TA parameter and a speed of the first communication apparatus.

Based on the foregoing technical solution, the first configuration information sent by the second communication apparatus includes the at least two pieces of configuration information, so that the first communication apparatus may determine, based on the speed of the first communication apparatus, the sending periodicity of the corresponding change rate of the first TA parameter in the at least two pieces of configuration information included in the first configuration information, and send the change rate of the first TA parameter.

In a possible implementation of the fourth aspect, the first configuration information is used for configuring a first sending frequency of the first message; and after that the second communication apparatus sends first configuration information, the method further includes: The second communication apparatus sends second configuration information to the first communication apparatus, where the second configuration information is used for configuring a second sending frequency of the first message, and the first sending frequency is different from the second sending frequency.

Based on the foregoing technical solution, an update process may further exist for the configuration information used for configuring the sending policy of the first message. The second communication apparatus may send the second configuration information used for updating the first configuration information, so that the first communication apparatus sends the first message based on the second sending frequency configured by using the updated second configuration information.

In a possible implementation of the fourth aspect, the first sending frequency is greater than the second sending frequency.

Based on the foregoing technical solution, in time domain, a moment at which the first communication apparatus receives the first configuration information is before a moment at which the first communication apparatus receives the second configuration information. When the first communication apparatus accesses the second communication apparatus for the first time, the first communication apparatus sends the first message based on the larger first sending frequency, to ensure that the first communication apparatus accesses the second communication apparatus. Then, when a communication link between the first communication apparatus and the second communication apparatus is stable, the first communication apparatus sends the first message based on the smaller second sending frequency, to save communication resources.

In a possible implementation of the fourth aspect, the first TA parameter includes a TA value between the first communication apparatus and the second communication apparatus; or the first TA parameter includes Koffest corresponding to a TA value between the first communication apparatus and the second communication apparatus. In a possible implementation of the fourth aspect, the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment; the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or the first TA parameter includes a third differential value, and the third differential value indicates a difference between a common TA value between the first communication apparatus and the second communication apparatus and a TA value between the first communication apparatus and the second communication apparatus.

Based on the foregoing technical solution, in the first message, the first TA parameter indicating the TA between the first communication apparatus and the second communication apparatus may be implemented in the foregoing plurality of manners, to improve flexibility of implementing the solution.

In a possible implementation of the fourth aspect, a TA type of the first TA parameter is a service link side TA.

Based on the foregoing technical solution, in a satellite communication process, the TA between the first communication apparatus and the second communication apparatus includes at least the service link side TA and a common link side TA. Because a value of the common link side TA is generally a value that can be obtained in advance by the second communication apparatus, an implementation in which the first communication apparatus sends only the service link side TA can enable the second communication apparatus to determine the TA between the first communication apparatus and the second communication apparatus, to reduce communication resource consumption and improve communication efficiency.

Optionally, both a TA type of a first TA and a TA type of a second TA include the service link side TA and the common link side TA.

A fifth aspect of embodiments of this application provides a first communication apparatus, including a processing unit and an input/output unit, where
the processing unit is configured to determine a target reference point;
the processing unit is further configured to determine information about a first timing advance TA, where the information about the first TA indicates TA information between the first communication apparatus and the target reference point; and
the input/output unit is configured to send first information, where the first information includes the information about the first TA.

In a possible implementation of the fifth aspect,
the information about the first TA and information about the target reference point are carried in a first message, where the first message is a message 3 or a message A; or
the information about the first TA and information about the target reference point are carried in different messages.

In a possible implementation of the fifth aspect, the first information further includes the information about the target reference point.

In a possible implementation of the fifth aspect,
the input/output unit is further configured to send a first request message, where the first request message is used to request to report the information about the target reference point; and
the input/output unit is further configured to receive a first response message, where the first response message indicates that reporting of the information about the target reference point is allowed.

In a possible implementation of the fifth aspect, that the input/output unit sends the first request message when at least one of the following conditions is satisfied includes:
a moving speed of the first communication apparatus is greater than a first threshold;
the first communication apparatus determines that beam switching occurs; or
the first communication apparatus determines that cell handover occurs.

In a possible implementation of the fifth aspect, the input/output unit is specifically configured to:
receive first configuration information, where the first configuration information is used for configuring a sending policy of the first information; and
send the information about the target reference point based on the first configuration information.

In a possible implementation of the fifth aspect, when the moving speed of the first communication apparatus is greater than a second threshold, the input/output unit is further configured to:
send a second request message, where the second request message is used to request to update the first configuration information; and
receive third configuration information, where the third configuration information is updated configuration information.

In a possible implementation of the fifth aspect, the sending policy includes at least one of a sending frequency of the first information, a sending periodicity of the first information, a time domain resource carrying the first information, and a frequency domain resource carrying the first information.

In a possible implementation of the fifth aspect,
the information about the target reference point is three-dimensional coordinate system information, longitude and latitude coordinate system information, or index information.

In a possible implementation of the fifth aspect,
the input/output unit is further configured to receive second configuration information, where the second configuration information is used for configuring a set of reference points, and the set of reference points includes the target reference point.

In a possible implementation of the fifth aspect, the information about the first TA includes at least one of the following:
an offset between the first TA and a second TA, where the first TA is a TA between the first communication apparatus and the second communication apparatus, and the second TA is a TA between the target reference point and the second communication apparatus; or
an offset between Koffset corresponding to the first TA and Koffset corresponding to the second TA.

In a possible implementation of the fifth aspect, both a TA type of the first TA and a TA type of the second TA are service link side TAs.

In a possible implementation of the fifth aspect, the input/output unit is further configured to:
send a change rate of the information about the first TA.

In a possible implementation of the fifth aspect,
the information about the first TA and the change rate of the information about the first TA are carried in a second message; or
the information about the first TA and the change rate of the information about the first TA are carried in different messages.

In a possible implementation of the fifth aspect, a length of valid duration of the change rate of the information about the first TA is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation of the fifth aspect, the input/output unit is specifically configured to:
receive fourth configuration information, where the fourth configuration information is used for configuring a sending policy of the change rate of the information about the first TA; and
send the change rate of the information about the first TA based on the fourth configuration information.

In a possible implementation of the fifth aspect, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus; and
the input/output unit is specifically configured to:
send the change rate of the information about the first TA based on the speed of the first communication apparatus and the fourth configuration information.

A sixth aspect of embodiments of this application provides a second communication apparatus, including an input/output unit and a processing unit, where
the input/output unit is configured to receive first information, where the first information includes information about a first timing advance TA, and the information about the first TA indicates TA information between a first communication apparatus and a target reference point; and
the processing unit is configured to determine a TA between the second communication apparatus and the first communication apparatus based on the first information.

In a possible implementation of the sixth aspect, the first information further includes information about the target reference point.

In a possible implementation of the sixth aspect,
the information about the first TA and the information about the target reference point are carried in a first message, where the first message is a message 3 or a message A; or
the information about the first TA and the information about the target reference point are carried in different messages.

In a possible implementation of the sixth aspect,
the input/output unit is further configured to receive a first request message, where the first request message is used to request to report the information about the target reference point; and
the input/output unit is further configured to send a first response message, where the first response message indicates that reporting of the information about the target reference point is allowed.

In a possible implementation of the sixth aspect,
the input/output unit is further configured to send first configuration information, where the first configuration information is used for configuring a sending policy of the first information.

In a possible implementation of the sixth aspect, the sending policy includes at least one of a sending frequency of the first information, a sending periodicity of the first information, a time domain resource carrying the first information, and a frequency domain resource carrying the first information.

In a possible implementation of the sixth aspect, the information about the target reference point is three-dimensional coordinate system information, longitude and latitude coordinate system information, or index information.

In a possible implementation of the sixth aspect,
the input/output unit is further configured to send second configuration information, where the second configuration information is used for configuring a set of reference points, and the set of reference points includes the target reference point.

In a possible implementation of the sixth aspect, the information about the first TA includes at least one of the following:
an offset between the first TA and a second TA, where the first TA is a TA between the first communication apparatus and the second communication apparatus, and the second TA is a TA between the target reference point and the second communication apparatus; or
an offset between Koffset corresponding to the first TA and Koffset corresponding to the second TA.

In a possible implementation of the sixth aspect,
both a TA type of the first TA and a TA type of the second TA are service link side TAs.

In a possible implementation of the sixth aspect, the input/output unit is further configured to:
receive a change rate of the information about the first TA.

In a possible implementation of the sixth aspect,
the information about the first TA and the change rate of the information about the first TA are carried in a second message; or
the information about the first TA and the change rate of the information about the first TA are carried in different messages.

In a possible implementation of the sixth aspect, a length of valid duration of the change rate of the information about the first TA is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation of the sixth aspect, the input/output unit is specifically configured to:
send fourth configuration information, where the fourth configuration information is used for configuring a sending policy of the change rate of the information about the first TA.

In a possible implementation of the sixth aspect, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus.

A seventh aspect of embodiments of this application provides a first communication apparatus. The apparatus includes a processing unit and an input/output unit, where
the processing unit is configured to determine a first timing advance TA parameter and a change rate of the first TA parameter, where the first TA parameter indicates a TA between the first communication apparatus and a second communication apparatus; and
the input/output unit is configured to send a first message, where the first message includes the first TA parameter and the change rate of the first TA parameter.

In a possible implementation of the seventh aspect,
a length of valid duration of the change rate of the first TA parameter is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation of the seventh aspect, the input/output unit is specifically configured to:
receive first configuration information, where the first configuration information is used for configuring a sending policy of the first message; and
send the first message based on the first configuration information.

In a possible implementation of the seventh aspect, the sending policy includes a sending periodicity of the change rate of the first TA parameter, the fourth configuration information includes at least two pieces of configuration information, and each of the at least two pieces of configuration information includes an association relationship between the sending periodicity of the change rate of the first TA parameter and a speed of the first communication apparatus; and
the input/output unit is specifically configured to:
send the change rate of the first TA parameter based on the speed of the first communication apparatus and the first configuration information.

In a possible implementation of the seventh aspect, the input/output unit is further configured to:
receive second configuration information, where the second configuration information is used for configuring a second sending frequency of the first message, and the first sending frequency is different from the second sending frequency.

In a possible implementation of the seventh aspect, the first sending frequency is greater than the second sending frequency.

In a possible implementation of the seventh aspect,
the first TA parameter includes a TA value between the first communication apparatus and the second communication apparatus; or
the first TA parameter includes Koffest corresponding to a TA value between the first communication apparatus and the second communication apparatus.

In a possible implementation of the seventh aspect,
the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment; the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or the first TA parameter includes a third differential value, and the third differential value indicates a difference between a common TA value between the first communication apparatus and the second communication apparatus and a TA value between the first communication apparatus and the second communication apparatus.

In a possible implementation of the seventh aspect,
a TA type of the first TA parameter is a service link side TA.

An eighth aspect of embodiments of this application provides a second communication apparatus. The apparatus includes a processing unit and an input/output unit, where
the input/output unit is configured to receive a first message, where the first message includes a first timing advance TA parameter and a change rate of the first TA parameter, and the first TA parameter indicates a TA between a first communication apparatus and the second communication apparatus; and
the processing unit is configured to determine the TA between the first communication apparatus and the second communication apparatus based on the first message.

In a possible implementation of the eighth aspect,
a length of valid duration of the change rate of the first TA parameter is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation of the eighth aspect, the input/output unit is further configured to:
send first configuration information, where the first configuration information is used for configuring a sending policy of the first message.

In a possible implementation of the eighth aspect, the sending policy includes a sending periodicity of the change rate of the first TA parameter, the first configuration information includes at least two pieces of configuration information, and each of the at least two pieces of configuration information includes an association relationship between the sending periodicity of the change rate of the first TA parameter and a speed of the first communication apparatus.

In a possible implementation of the eighth aspect, the input/output unit is further configured to:
send second configuration information to the first communication apparatus, where the second configuration information is used for configuring a second sending frequency of the first message, and the first sending frequency is different from the second sending frequency.

In a possible implementation of the eighth aspect, the first sending frequency is greater than the second sending frequency.

In a possible implementation of the eighth aspect,
the first TA parameter includes a TA value between the first communication apparatus and the second communication apparatus; or
the first TA parameter includes Koffest corresponding to a TA value between the first communication apparatus and the second communication apparatus.

In a possible implementation of the eighth aspect,
the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment; the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or the first TA parameter includes a third differential value, and the third differential value indicates a difference between a common TA value between the first communication apparatus and the second communication apparatus and a TA value between the first communication apparatus and the second communication apparatus.

In a possible implementation of the eighth aspect,
a TA type of the first TA parameter is a service link side TA.

A ninth aspect of embodiments of this application provides a communication apparatus, including at least one logic circuit and an input/output interface, where
the input/output interface is configured to output first information; and
the logic circuit is configured to perform the method according to any one of the first aspect or the possible implementations of the first aspect.

A tenth aspect of embodiments of this application provides a communication apparatus, including at least one logic circuit and an input/output interface, where
the input/output interface is configured to input first information; and
the logic circuit is configured to perform the method according to any one of the second aspect or the possible implementations of the second aspect.

An eleventh aspect of embodiments of this application provides a communication apparatus, including at least one logic circuit and an input/output interface, where
the input/output interface is configured to output a first message; and
the logic circuit is configured to perform the method according to any one of the third aspect or the possible implementations of the third aspect.

A twelfth aspect of embodiments of this application provides a communication apparatus, including at least one logic circuit and an input/output interface, where
the input/output interface is configured to input a first message; and
the logic circuit is configured to perform the method according to any one of the fourth aspect or the possible implementations of the fourth aspect.

A thirteenth aspect of embodiments of this application provides a computer-readable storage medium that stores one or more computer-executable instructions. When the computer-executable instruction is executed by a processor, the processor performs the method according to any one of the first aspect or the possible implementations of the first aspect; when the computer-executable instruction is executed by a processor, the processor performs the method according to any one of the second aspect or the possible implementations of the second aspect; when the computer-executable instruction is executed by a processor, the processor performs the method according to any one of the third aspect or the possible implementations of the third aspect; or when the computer-executable instruction is executed by a processor, the processor performs the method according to any one of the fourth aspect or the possible implementations of the fourth aspect.

A fourteenth aspect of embodiments of this application provides a computer program product (or referred to as a computer program) that stores one or more computer program instructions. When the computer program product is executed by a processor, the processor performs the method according to any one of the first aspect or the possible implementations of the first aspect; when the computer program product is executed by a processor, the processor performs the method according to any one of the second aspect or the possible implementations of the second aspect; when the computer program product is executed by a processor, the processor performs the method according to any one of the third aspect or the possible implementations of the third aspect; or when the computer program product is executed by a processor, the processor performs the method according to any one of the fourth aspect or the possible implementations of the fourth aspect.

A fifteenth aspect of embodiments of this application provides a chip system. The chip system includes at least one processor, configured to support a first communication apparatus in implementing the function in any one of the first aspect or the possible implementations of the first aspect; or configured to support a first communication apparatus in implementing the function in any one of the third aspect or the possible implementations of the third aspect.

In a possible design, the chip system may further include a memory. The memory is configured to store program instructions and data that are necessary for the first communication apparatus. The chip system may include a chip; or may include a chip and another discrete component. Optionally, the chip system further includes an interface circuit, and the interface circuit provides the program instructions and/or the data for the at least one processor.

A sixteenth aspect of embodiments of this application provides a chip system. The chip system includes at least one processor, configured to support a second communication apparatus in implementing the function in any one of the second aspect or the possible implementations of the second aspect; or configured to support a second communication apparatus in implementing the function in any one of the fourth aspect or the possible implementations of the fourth aspect.

In a possible design, the chip system may further include a memory. The memory is configured to store program instructions and data that are necessary for the second communication apparatus. The chip system may include a chip; or may include a chip and another discrete component. Optionally, the chip system further includes an interface circuit, and the interface circuit provides the program instructions and/or the data for the at least one processor.

A seventeenth aspect of embodiments of this application provides a communication system. The communication system includes the first communication apparatus according to the fifth aspect and the second communication apparatus according to the sixth aspect; the communication system includes the first communication apparatus according to the seventh aspect and the second communication apparatus according to the eighth aspect; the communication system includes the first communication apparatus according to the ninth aspect and the second communication apparatus according to the tenth aspect; or the communication system includes the first communication apparatus according to the eleventh aspect and the second communication apparatus according to the twelfth aspect.

For technical effects brought by any implementation of the fifth aspect to the seventeenth aspect, refer to the technical effects brought by different implementation designs of the first aspect, the second aspect, or the third aspect, or the fourth aspect. Details are not described herein again.

It should be understood that, for the components in the device, the foregoing "sending" may be referred to as "output", and the foregoing "receiving" may be referred to as "input".

It can be learned from the foregoing technical solutions that, the first information sent by the first communication apparatus includes the information that is about the first TA and that indicates the TA information between the first communication apparatus and the target reference point, so that a receiver of the first information (in this embodiment and subsequent embodiments, that the receiver of the first information is the second communication apparatus is used as an example) receives the information about the first TA. Then, the receiver of the first information determines the TA between the first communication apparatus and the second communication apparatus based on the information about the first TA. Therefore, when the first communication apparatus and the second communication apparatus are located in the satellite communication system, the TA between the first communication apparatus and the second communication apparatus is determined based on the TA information between the first communication apparatus and the target reference point, so as to determine TAs between different communication apparatuses in the satellite communication system.

### BRIEF DESCRIPTION OF DRAWINGS

FIG. 1 is a schematic diagram of a communication system according to an embodiment of this application;
FIG. 2 is a schematic diagram of TA transmission according to an embodiment of this application;
FIG. 3 is a schematic diagram of a communication method according to an embodiment of this application;
FIG. 4a is another schematic diagram of a communication method according to an embodiment of this application;
FIG. 4b is another schematic diagram of a communication method according to an embodiment of this application;
FIG. 4c is another schematic diagram of a communication method according to an embodiment of this application;
FIG. 5 is another schematic diagram of a communication method according to an embodiment of this application;
FIG. 6 is a schematic diagram of a communication apparatus according to an embodiment of this application;
FIG. 7 is another schematic diagram of a communication apparatus according to an embodiment of this application; and
FIG. 8 is another schematic diagram of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

First, some terms in embodiments of this application are explained and described, to facilitate understanding of a person skilled in the art.
(1) Terminal device: The terminal device may be a wireless terminal device that can receive scheduling and indication information from a network device. The wireless terminal device may be a device that provides a user with voice and/or data connectivity, a handheld device with a wireless connection function, or another processing device connected to a wireless modem.

The terminal device may communicate with one or more core networks or the internet through a radio access network (radio access network, RAN). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or in-vehicle mobile apparatus that exchanges voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), an unmanned aerial vehicle, or the like. Alternatively, the terminal device may be a wearable device or a terminal device in a next-generation communication system, for example, a terminal device in a 5G communication system, a terminal device in a future evolved public land mobile network (public land mobile network, PLMN), or a terminal device in another communication system that is to be further developed from the 5G communication system.

In addition, the terminal device may alternatively be a machine to machine (machine to machine, M2M) communication system, a machine type communication (machine type communication, MTC) communication system, a vehicle-to-everything (vehicle-to-everything, V2X) communication system, a device to device (Device to Device, D2D) communication system, or a terminal device in another communication system.

(2) Network device: The network device may be a device in a wireless network. For example, the network device may be a radio access network (radio access network, RAN) node (or device), which may also be referred to as a base station, through which a terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), an unmanned aerial vehicle, or the like.

In addition, the network device may alternatively be a machine to machine (machine to machine, M2M) communication system, a machine type communication (machine type communication, MTC) communication system, a vehicle-to-everything (vehicle-to-everything, V2X) communication system, a device to device (Device to Device, D2D) communication system, or a network device in another communication system.

In addition, in a network structure, the network device is a RAN device including a central unit (central unit, CU) node, or the network device is a RAN device including a distributed unit (distributed unit, DU) node, or the network device is a RAN device including a CU node and a DU node.

The network device can send configuration information (for example, carried in a scheduling message and/or an indication message) to the terminal device, and the terminal device further performs network configuration based on the configuration information, so that network configurations of the network device and the terminal device are aligned. Alternatively, network configurations of the network device and the terminal device are aligned by presetting the network configuration of the network device and the network configuration of the terminal device. Specifically, "aligned" means that when there is an interaction message between the network device and the terminal device, the network device and the terminal device have a consistent understanding of a carrier frequency for sending and receiving the interaction message, determining of an interaction message type, a meaning of field information carried in the interaction message, or another configuration of the interaction message.

In addition, in another possible case, the network device may alternatively be another apparatus that provides a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is a network device.

(3) Configuration and pre-configuration: In this application, both configuration and pre-configuration are used. Configuration means that a network device such as a base station or a server sends configuration information of some parameters or parameter values to a terminal by using a message or signaling, so that the terminal determines a parameter for communication or a resource for transmission based on the values or the information. Similar to configuration, pre-configuration may be a manner in which a network device such as a base station or a server sends parameter information or a value to a terminal by using a communication link or a carrier; a manner in which a corresponding parameter or parameter value is defined (for example, the parameter value is specified in a standard); or a manner in which a related parameter or value is written into a terminal device in advance. This is not limited in this application. Further, the values and parameters may be changed or updated.

(4) In this application, "indicate" may include "directly indicate" and "indirectly indicate". When a piece of indication information indicates A, it may be understood that the indication information carries A, directly indicates A, or indirectly indicates A.

In this application, information indicated by indication information is referred to as to-be-indicated information. In a specific implementation process, the to-be-indicated information is indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

(5) Terms "system" and "network" may be used interchangeably in embodiments of this application. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of the items, including a singular item (piece) or any combination of a plurality of items (pieces). For example, "at least one of A, B, and C" includes A, B, C, AB, AC, BC, or ABC. In addition, unless otherwise specified, ordinal numbers such as "first" and "second" mentioned in embodiments of this application are used for distinguishing between a plurality of objects, but are not used for limiting a sequence, a time sequence, priorities, or importance of the plurality of objects.

It should be noted that the technical solutions in embodiments of this application are applicable to a communication system that integrates terrestrial communication and satellite communication. The communication system may also be referred to as a non-terrestrial network (non-terrestrial network, NTN) communication system. The terrestrial communication system may be, for example, a long term evolution (long term evolution, LTE) system, a universal mobile telecommunication system (universal mobile telecommunication system, UMTS), a 5G communication system or a new radio (new radio, NR) system, or a communication system that is to be further developed from the 5G communication system. This is not limited herein.

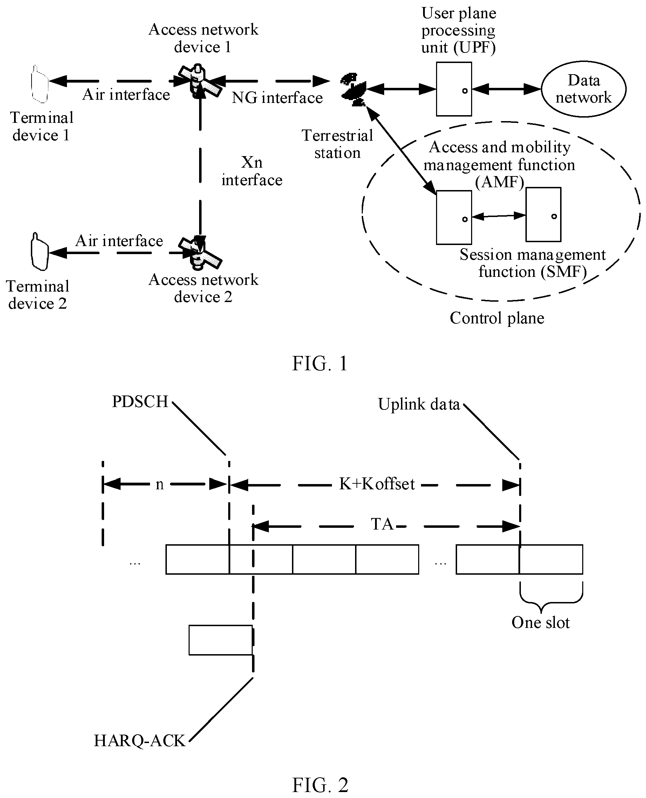

FIG. 1 is a schematic diagram of a communication system according to an embodiment of this application.

FIG. 1 is a schematic diagram of an NTN communication system according to an embodiment of this application. In FIG. 1, an example in which the NTN communication system integrates 5G communication and satellite communication is used. As shown in FIG. 1, the communication system includes a terminal device 1, a terminal device 2, an access network device 1, an access network device 2, and a related core network device.

The terminal device may access a network (for example, the access network device) through a 5G new radio interface (for example, a Uu interface), and the access network device may be connected to the core network device through a radio link (for example, an NG interface). For example, the NG interface may be configured to exchange service data of a user and signaling such as non-access stratum (non-access stratum, NAS) signaling of the core network device. In addition, a radio link (for example, an Xn interface) between the access network devices can be used for completing signaling exchange and user data transmission between the access network devices. For example, the Xn interface may be configured to exchange signaling such as handover.

In FIG. 1, the terminal device may be a terrestrial mobile terminal device or a terrestrial fixed terminal device, the access network device may be deployed on a satellite or on the ground, and the core network device may be deployed on the ground. When the access network device is deployed on a satellite, the access network device may be referred as a satellite network device.

Optionally, the communication system shown in FIG. 1 may further include a terrestrial station that is responsible for forwarding signaling and service data between the satellite network device and the core network device. For example, the terrestrial station may be connected to the satellite network device through a wireless link (for example, an NG interface) and connected to an AMF or a UPF through a wireless link or a wired link, and further communicate with a data network or an SMF.

In this embodiment of this application, the core network device may be connected to the access network device, and is used for services such as user access control, mobility association, session management, user security authentication, and charging. The core network device may include a plurality of functional units. For example, the core network device may be classified into a control plane functional entity and a data plane functional entity. The control plane functional entity includes, for example, an access management function (access management function, AMF) and a session management function (session management function, SMF). The data plane functional entity includes, for example, a UPF and a data network.

It should be understood that the communication system in FIG. 1 is merely an example for description, and a communication system applicable to this application is not limited thereto. For example, one access network device may serve a plurality of terminal devices, and one terminal device is only used as an example in FIG. 1. For another example, a core network side may further include another core network device, for example, an authentication server function (authentication server function, AUSF) or a packet control function (packet control function, PCF).

In comparison with terrestrial communication, the satellite communication in FIG. 1 has unique advantages. For example, satellite communication can provide a wider coverage area and provide communication services for areas such as oceans, forests, and high altitudes that cannot be covered by terrestrial base stations. When the satellite communication is converged with the current 5G communication, reliability of the 5G communication can be enhanced, for example, it is ensured that an airplane, a train, and users on the traffic obtain better communication services; and more data transmission resources can further be provided for the 5G communication, and a network rate is improved. Therefore, supporting both terrestrial communication and satellite communication is an inevitable trend of a future 5G communication system or another communication system that is to be further developed from the 5G communication system, and has great benefits in terms of wide coverage, reliability, multiple connections, a high throughput, and the like.

Satellite communication is similar to terrestrial communication. A coverage area of a beam of a terrestrial base station or a satellite base station is limited. Because distances between terminal devices at different locations of the beam and the terrestrial base station or the satellite base station are different, different delays are generated in a communication process.

Regardless of satellite communication or terrestrial communication, in a communication process, due to a transmission delay, to ensure orthogonal transmission of uplink data of a plurality of terminal devices, the terminal devices need to send the uplink data based on different timing advances (timing advances, TAs). This process is referred to as an uplink timing advance process.

However, in comparison with terrestrial communication, a greatest characteristic of satellite communication is that a round-trip transmission delay is high, and a terminal device may frequently perform beam switching or cell handover due to movement of a satellite. As a result, a TA-related configuration manner in current terrestrial communication cannot be applied to satellite communication. Therefore, convergence of satellite and 5G communication requires enhancement of the current 5G protocol to adapt to satellite communication.

Currently, to resolve a problem of a large uplink timing advance, an offset (denoted as Koffset) is introduced into an NTN. The offset may also be referred to as an offset factor, a timing offset, or the like. Koffset represents an extended time-domain resource parameter in satellite communication. Based on Koffset, a network device performs timing advance adjustment by using a sufficient time length between data carried on a physical downlink shared channel (physical downlink shared channel, PDSCH) and hybrid automatic repeat request acknowledgment (hybrid automatic repeat request acknowledgment, HARQ-ACK) information sent by a terminal device.

An example in which the network device is a satellite base station is used. The following describes interaction between the satellite base station and a terminal device by using an example shown in FIG. 2.

For example, as shown in FIG. 2, when receiving time of PDSCH data ends in an n^{th} slot (slot) (for example, a location of a PDSCH in FIG. 2), the terminal device needs to feed back to-be-fed-back uplink data in an (n+K+Koffset)^{th} slot, so that the satellite base station receives the uplink data in the (n+K+Koffset)^{th} slot (for example, a location of the uplink data in FIG. 2). K is indicated by DCI that schedules the PDSCH data, and Koffset is a parameter related to a scheduling delay. However, because there is a timing advance (TA), an actual sending moment of a user is an (n+k+Koffset-TA)^{th} slot (for example, a location of a HARQ-ACK in FIG. 2), so that the satellite base station can receive the uplink data in the (n+k+Koffset)^{th} slot.

As shown in FIG. 2, after a value of Koffset is introduced, the slot in which the terminal device sends HARQ-ACK information may be adjusted by using the value of Koffset, to provide a sufficient time length for the terminal device to perform timing advance adjustment, so as to ensure that actual data feedback time is after corresponding downlink data.

In addition, the value of Koffset selected by the terminal device may change. For example, in a random access process, the terminal device may configure a value of Koffset based on a maximum TA configured on a network side and send uplink data, to ensure that receiving time of the uplink data is before a specified time point (for example, the location of the uplink data in FIG. 2). For another example, to reduce a scheduling delay, after accessing the satellite base station, the terminal device may update Koffset to a user-level parameter, to reduce the scheduling delay. In this case, Koffset needs to be calculated based on a TA of the terminal device.

In the foregoing process, to obtain the TA of the terminal device, on a satellite base station side, the terminal device needs to report the TA or the terminal device needs to report a location of the terminal device, so that the satellite base station determines the TA of the terminal device. However, in the foregoing process, the following problems still exist: Problem 1: In an implementation in which the terminal device reports the TA, because a satellite and/or the terminal device may move quickly in a satellite communication process, the TA changes fast. As a result, large overheads are introduced when the TA is directly reported.

Problem 2: In an implementation in which the terminal device reports the location of the terminal device, directly reporting the location of the terminal device may cause a security problem and a privacy problem.

In conclusion, how to determine a TA in a satellite communication process is an urgent technical problem to be resolved. Therefore, embodiments of this application provide a communication method and a communication apparatus, to determine a TA between a first communication apparatus and a second communication apparatus based on TA information between the first communication apparatus and a target reference point, so as to determine TAs between different communication apparatuses in a satellite communication system. The method is applied to a satellite communication system, and the satellite communication system includes at least a terminal device used as the first communication apparatus and a network device used as the second communication apparatus.

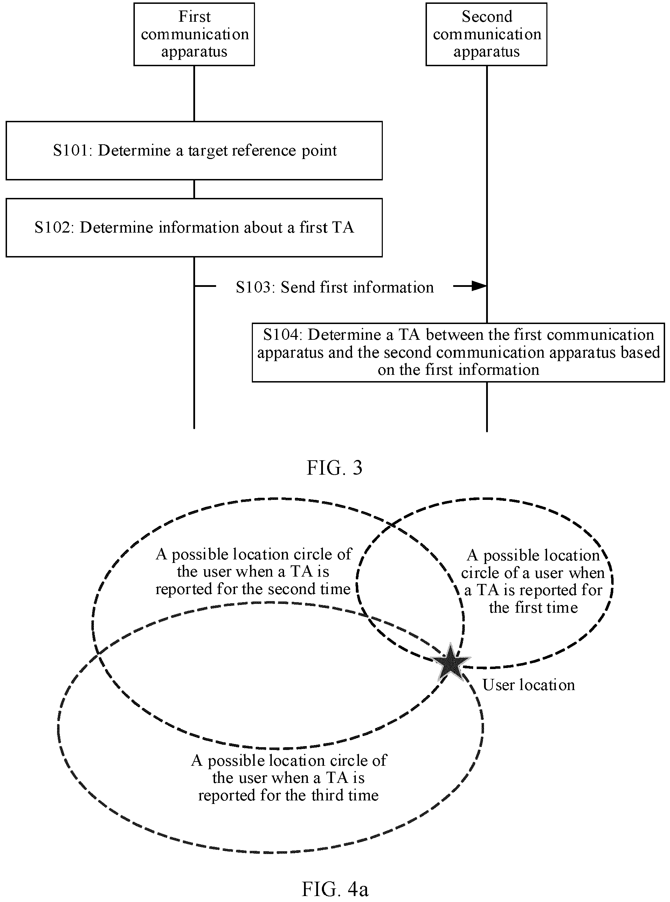

FIG. 3 is a schematic diagram of a communication method according to an embodiment of this application. The method includes the following steps.

S101: A first communication apparatus determines a target reference point.

In this embodiment, the first communication apparatus determines the target reference point in step S101.

Specifically, the target reference point may be a virtual reference point that is determined by the first communication apparatus based on a configuration/pre-configuration determining manner and that is at a specific distance from the first communication apparatus. A value of the distance may be 10 kilometers (kilometer, KM), 20 KM, 50 KM, or another value. This is not limited herein.

The first communication apparatus may determine the target reference point in a plurality of manners in step S101, and the following describes the manners in detail.

In a possible implementation, before step S101, the method further includes: The first communication apparatus receives second configuration information, where the second configuration information is used for configuring a set of reference points, and the set of reference points includes the target reference point. Then, in step S101, the first communication apparatus may determine the target reference point in the set of reference points based on the second configuration information from the second communication apparatus. For example, a reference point that is closest to the first communication apparatus is selected from the set of reference points as the target reference point. For another example, a reference point that is farthest from the first communication apparatus is selected from the set of reference points as the target reference point. For another example, a reference point that is closest to an altitude of the first communication apparatus is selected from the set of reference points as the target reference point. Alternatively, another implementation is used. This is not limited herein.

Optionally, the second configuration information is pre-configured in the first communication apparatus.

Optionally, the second configuration information is carried in RRC, a MAC CE, DCI, or another message/signaling. This is not limited herein.

Optionally, the set of reference points includes a set of reference point index values, where each reference point index value indicates longitude and latitude coordinates, three-dimensional coordinates, and the like of a specific reference point.

In a possible implementation, the first communication apparatus autonomously selects the target reference point based on location information of the first communication apparatus. For example, the first communication apparatus determines, in a map in which the location information of the first communication apparatus is located, a landmark building (for example, a square A or a building B) near the location information as the target reference point. For another example, the first communication apparatus obtains image information based on photographing of a surrounding environment, and selects a building in the image information as the target reference point. For another example, the first communication apparatus uses a location point of a terrestrial station in the satellite communication system (as shown in FIG. 1) as the target reference point. Alternatively, another implementation is used. This is not limited herein.

It should be noted that, in this embodiment, a determining mechanism for determining the target reference point by the first communication apparatus in step S101 is not limited, and the foregoing implementations are merely used as implementation examples for description.

S102: The first communication apparatus determines first information.

In this embodiment, the first communication apparatus determines the first information in step S102. The first information includes information about a first TA, and the information about the first TA indicates TA information between the first communication apparatus and the target reference point.

In a possible implementation, the information that is about the first TA and that is determined by the first communication apparatus in step S102 includes at least one of the following: an offset between the first TA and a second TA, where the first TA is a TA between the first communication apparatus and the second communication apparatus, and the second TA is a TA between the target reference point and the second communication apparatus; or an offset between Koffset corresponding to the first TA and Koffset corresponding to the second TA.

Optionally, the information about the first TA has the foregoing different implementations. Correspondingly, a measurement unit corresponding to a value of the information about the first TA may be implemented in a plurality of manners, for example, being implemented as a slot, a subframe, and a Koffset offset. This is not limited herein.

In addition, both a TA type of the first TA and a TA type of the second TA are service link side TAs. Specifically, in a satellite communication process, the TA between the first communication apparatus and the second communication apparatus includes at least the service link side TA and a common link side TA. Because a value of the common link side TA is generally a value that can be obtained in advance by the second communication apparatus, in a subsequent process, an implementation in which the first communication apparatus sends only the service link side TA can enable the second communication apparatus to determine the TA between the first communication apparatus and the second communication apparatus, to reduce communication resource consumption and improve communication efficiency. Optionally, both the TA type of the first TA and the TA type of the second TA include the service link side TA and the common link side TA.

According to the claimed invention, the first information further includes information about the target reference point, where the information about the target reference point indicates the target reference point determined in step S101. Specifically, the first information determined by the first communication apparatus in step S102 further includes the information about the target reference point, so that the second communication apparatus may subsequently use the information that is about the target reference point and that is determined by the first communication apparatus as one of bases for determining the TA between the first communication apparatus and the second communication apparatus. Specifically, the information about the target reference point is three-dimensional coordinate system information of the target reference point, longitude and latitude coordinate system information of the target reference point, index information of the target reference point, or other information. This is not limited herein.

In a possible implementation, if the first information determined in step S102 further includes the information about the target reference point, before the first communication apparatus determines the information about the target reference point, the method further includes: The first communication apparatus first sends a first request message, where the first request message is used to request to report the information about the target reference point; and then the first communication apparatus receives a first response message, where the first response message indicates that reporting of the information about the target reference point is allowed.

Specifically, the first communication apparatus may trigger sending of the information about the target reference point based on interaction between the first request message and the first response message, so that the second communication apparatus can determine the target reference point associated with the information about the first TA; and when determining, based on the information about the first TA, the TA between the first communication apparatus and the second communication apparatus, use the information about the target reference point as one of bases of the determining process.

That the first communication apparatus sends the first request message before step S102 when at least one of the following conditions is satisfied includes:
a moving speed of the first communication apparatus is greater than a first threshold;
the first communication apparatus determines that beam switching occurs; or
the first communication apparatus determines that cell handover occurs.

Specifically, when at least one of the foregoing conditions is satisfied, the first communication apparatus determines that a communication delay between the first communication apparatus and the second communication apparatus needs to be updated, so that the first communication apparatus sends, before step S102, the first request message requesting to report the information about the target reference point, and the second communication apparatus can perform, based on the first request message, a process of determining the TA between the first communication apparatus and the second communication apparatus.

S103: The first communication apparatus sends the first information.

In this embodiment, the first communication apparatus sends, in step S103, the first information determined in step S102; and correspondingly, the second communication apparatus receives the first information in step S103.

In a possible implementation, when the first communication apparatus sends the first information in step S103, the information about the first TA and the information about the target reference point are carried in a first message, where the first message is a message 3 (message 3) or a message A (message A); or the information about the first TA and the information about the target reference point are carried in different messages.

Specifically, when the first information sent by the first communication apparatus includes the information about the first TA and the information about the target reference point, the information about the first TA and the information about the target reference point may be carried in a same message, so that the second communication apparatus determines the two pieces of information in the same message, to save communication resources and improve communication efficiency. Alternatively, the information about the first TA and the information about the target reference point may be carried in different messages, so that the second communication apparatus separately determines the two pieces of information in the different messages, to improve flexibility of implementing the solution. For example, when the information about the first TA and the information about the target reference point may be carried in different messages, a sending frequency of the information about the first TA and a sending frequency of the information about the target reference point may be the same or different. For example, when the first communication apparatus is in a static motion state, or when the first communication apparatus moves at a low speed, or when the first communication apparatus moves within a small range, information about target reference points selected by the first communication apparatus when the information about the first TA is reported for a plurality of times may be a same reference point. Therefore, a sending frequency of the information about the first TA may be greater than a sending frequency of the information about the target reference point. For another example, when the first communication apparatus is in a high-speed motion state or the first communication apparatus moves within a large range (for example, the first communication apparatus is located on a train, an airplane, or the like), information about target reference points selected by the first communication apparatus when the information about the first TA is reported for a plurality of times may not be a same reference point. Therefore, a sending frequency of the information about the first TA may be equal to a sending frequency of the information about the target reference point.

In a possible implementation, a process in which the first communication apparatus sends the first information in step S103 specifically includes: The first communication apparatus first receives first configuration information, where the first configuration information is used for configuring a sending policy of the first information; and then the first communication apparatus sends the first information based on the first configuration information.

Specifically, the first communication apparatus may send the information about the target reference point to the second communication apparatus based on the first configuration information from the second communication apparatus, so that the second communication apparatus receives the information about the target reference point according to the sending policy, and uses the information about the target reference point as one of bases for determining the TA between the first communication apparatus and the second communication apparatus.

Optionally, the first configuration information is carried in RRC, a MAC CE, DCI, or another message/signaling. This is not limited herein.

Optionally, the first configuration information is pre-configured in the first communication apparatus.

Specifically, the sending policy indicated by the first configuration information includes at least one of a sending frequency of the first information, a sending periodicity of the first information, a time domain resource carrying the first information, and a frequency domain resource carrying the first information. Based on the foregoing technical solution, the first configuration information that is from the second communication apparatus and that is used for configuring the sending policy of the first information may be specifically implemented by using the plurality of sending policies, so that the first communication apparatus sends the first information based on the first configuration information.

In addition, before step S103, if the moving speed of the first communication apparatus is greater than a second threshold, the first communication apparatus sends a second request message, where the second request message is used to request to update the first configuration information. Then, the first communication apparatus receives third configuration information, where the third configuration information is updated configuration information. When the moving speed of the first communication apparatus is greater than the second threshold, the first communication apparatus determines that a communication delay between the first communication apparatus and the second communication apparatus may need to be updated, so that the first communication apparatus may send the second request message, to receive the updated configuration information.

Optionally, the third configuration information is carried in RRC, a MAC CE, DCI, or another message/signaling. This is not limited herein.

The third configuration information is used for updating the first communication apparatus. In the foregoing implementation, a process in which the second communication apparatus sends the third configuration information may be triggered based on the request of the first communication apparatus. The following describes another implementation in which the second communication apparatus may alternatively actively send the third configuration information used for updating the first configuration information (that is, the request of the first communication apparatus is not required).

Specifically, in a solution implementation process, as shown in FIG. 4a, based on a plurality of times of execution of step S103, to be specific, the second communication apparatus may infer, based on a TA corresponding to the first information reported by the first communication apparatus each time, a location range of the first communication apparatus (for example, in FIG. 4a, a possible location circle of a user when a TA is reported for the first time, a possible location circle of the user when a TA is reported for the second time, and a possible location circle of the user when a TA is reported for the third time). Then, the second communication apparatus determines location information of the first communication apparatus (for example, the user location in FIG. 4a) based on the inferred location range of the first communication apparatus. In this case, for the static first communication apparatus or the first communication apparatus with a slow moving speed, after the second communication apparatus derives a location of the first communication apparatus, reporting of the TA may be reduced by using the third configuration information. Optionally, the third configuration information used for updating the first configuration information may indicate to update the sending policy indicated by the first configuration information, for example, increase/decrease the sending frequency of the first information, increase/decrease the sending periodicity of the first information, update the time domain resource carrying the first information, or update the frequency domain resource carrying the first information. This is not specifically limited herein. Specifically, the third configuration information may be adaptively configured based on a specific application scenario.

In a possible implementation, in addition to step S103, the method further includes: The first communication apparatus sends a change rate of the information about the first TA. Specifically, in addition to sending the information about the first TA in step S103, the first communication apparatus further sends the change rate of the information about the first TA. Therefore, after subsequently receiving the information about the first TA, the second communication apparatus can derive a TA between the first communication apparatus and the second communication apparatus in a specific time period based on the information about the first TA and the change rate of the information about the first TA.

Optionally, the information about the first TA and the change rate of the information about the first TA that are sent by the first communication apparatus are carried in a second message (for example, RRC or uplink control information (uplink control information, UCI)); or the information about the first TA and the change rate of the information about the first TA that are sent by the first communication apparatus are carried in different messages. Specifically, when the first communication apparatus sends the information about the first TA and the change rate of the information about the first TA, the information about the first TA and the change rate of the information about the first TA may be carried in a same message, so that the second communication apparatus determines the two pieces of information in the same message, to save communication resources and improve communication efficiency. Alternatively, the information about the first TA and the change rate of the information about the first TA may be carried in different messages, so that the second communication apparatus separately determines the two pieces of information in the different messages, to improve flexibility of implementing the solution.

In a possible implementation, a length of valid duration of the change rate of the information about the first TA is positively correlated with an absolute value of a first angle, where the first angle is a cell/beam elevation angle between the first communication apparatus and the second communication apparatus. Specifically, the change rate of the information about the first TA is associated with a communication cell (for example, whether the first communication apparatus is located at a cell edge)/a communication beam (for example, whether the first communication apparatus is located at a beam edge) between the first communication apparatus and the second communication apparatus. A larger absolute value of the cell/beam elevation angle between the first communication apparatus and the second communication apparatus indicates a lower communication delay between the first communication apparatus and the second communication apparatus; and therefore, the valid duration of the change rate of the information that is about the first TA and that is sent by the first communication apparatus is longer. A smaller absolute value of the cell/beam elevation angle between the first communication apparatus and the second communication apparatus indicates a higher communication delay between the first communication apparatus and the second communication apparatus; and therefore, the valid duration of the change rate of the information that is about the first TA and that is sent by the first communication apparatus is shorter.

Optionally, a value range of the absolute value of the first angle is 0° to 90°.

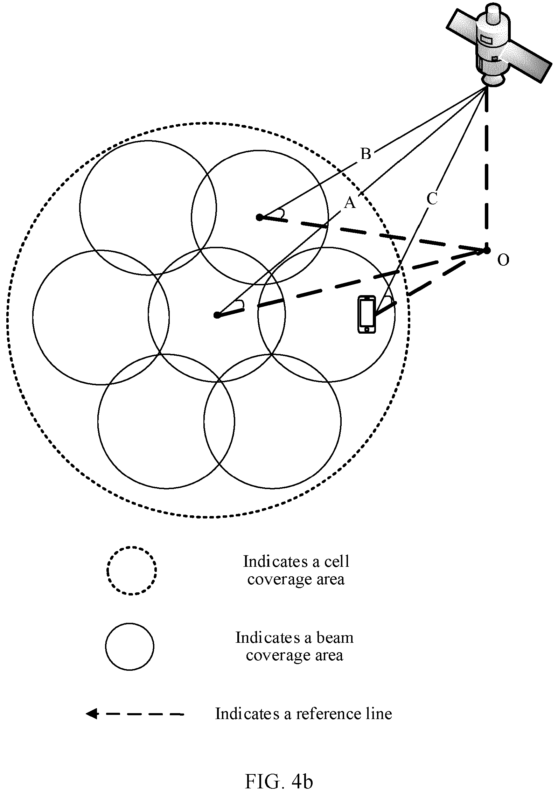

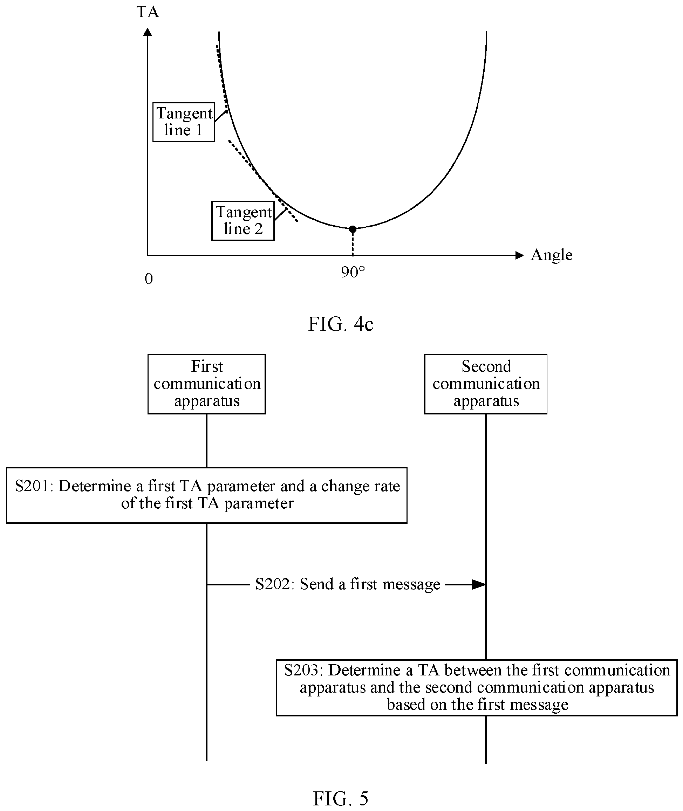

For example, the following uses FIG. 4b and FIG. 4c as an implementation example to describe a relationship between the valid duration of the change rate of the information about the first TA and the absolute value of the first angle. In the following example, the first communication apparatus is UE, and the second communication apparatus is a satellite. Specifically, in a scenario shown in FIG. 4b, an example in which a communication area in which the UE is located is a ground plane of the earth is used, and a projection point of the satellite on the plane is a point O. When the first angle is a cell elevation angle between the first communication apparatus and the second communication apparatus, an included angle between a connection line segment A between the satellite and a cell center and a projection line of the line segment A on the plane is used as the cell elevation angle; when the first angle is a beam elevation angle between the first communication apparatus and the second communication apparatus, an included angle between a connection line segment B between the satellite and a beam center and a projection line of the line segment B on the plane is used as the beam elevation angle; or when the first angle is a terminal elevation angle between the first communication apparatus and the second communication apparatus (depending on a case in which the satellite can obtain a location of the UE), an included angle between a connection line segment C between the satellite and the UE and a projection line of the line segment C on the plane is used as the terminal elevation angle. It should be noted that, for ease of description, when the angle (the cell elevation angle, the beam elevation angle, or the terminal elevation angle) obtained through measurement is greater than 90°, a complementary angle of the angle is used as a value of the first angle, that is, a value range of the absolute value of the first angle is 0° to 90°.

In the scenario shown in FIG. 4b, relationships between TA values obtained at different angles (the cell elevation angle, the beam elevation angle, or the terminal elevation angle) and the angles corresponding to the TA values may be represented by using an example coordinate system shown in FIG. 4c. The horizontal axis of the coordinate system is the angle and a value range is 0° to 90°, and the vertical axis of the coordinate system is the TA value. It is clear that a tangent line of any point of the curve shown in FIG. 4c is the change rate of the TA. In other words, calculating the TA by using the change rate of the TA is an approximate linear change process of the TA. When the absolute value of the angle is close to 90°, that is, when the satellite is close to a substellar point, a difference between a linear TA and an actual TA is large, and an error is large. When the absolute value of the angle is close to 0°, the change of the TA is close to a straight line, that is, the TA calculated by using the change rate of the TA is close to the actual TA, and an error is small. Therefore, it can be concluded that, under a same error requirement, when the absolute value of the angle (the cell elevation angle, the beam elevation angle, or the terminal elevation angle) is close to 90°, the valid duration of the change rate of the TA is shorter; however, when the absolute value of the angle (the cell elevation angle, the beam elevation angle, or the terminal elevation angle) is close to 0°, the valid duration of the change rate of the TA is longer.

It should be noted that, in the scenario shown in FIG. 4b, the example in which the communication area in which the UE is located is the ground plane of the earth is used. In an actual application, the communication area in which the UE is located may be a surface of the earth, in another implementation, or refer to a similar implementation process shown in FIG. 4c.

Further, that the first communication apparatus sends the change rate of the information about the first TA includes: The first communication apparatus first receives fourth configuration information, where the fourth configuration information is used for configuring a sending policy of the change rate of the information about the first TA; and then the first communication apparatus sends the change rate of the information about the first TA based on the fourth configuration information. The first communication apparatus may send the change rate of the information about the first TA to the second communication apparatus based on the fourth configuration information from the second communication apparatus, so that the second communication apparatus receives the change rate of the information about the first TA according to the sending policy, and uses the change rate of the information about the first TA as one of bases for determining the TA between the first communication apparatus and the second communication apparatus.

Optionally, the fourth configuration information is carried in RRC, a MAC CE, DCI, or another message/signaling. This is not limited herein.

Optionally, the fourth configuration information is pre-configured in the first communication apparatus.

It should be noted that the plurality of pieces of configuration information in this embodiment include the first configuration information, the second configuration information, the third configuration information, and the fourth configuration information, and the plurality of pieces of configuration information may be separately carried by using different messages, or any two or more pieces of configuration information in the plurality of pieces of configuration information are carried by using a same message. This is not limited herein.

In addition, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus, where that the first communication apparatus sends the change rate of the information about the first TA based on the fourth configuration information includes: The first communication apparatus sends the change rate of the information about the first TA based on the speed of the first communication apparatus and the fourth configuration information.

It should be noted that the speed of the first communication apparatus may be a moving speed of the first communication apparatus relative to the ground, or may be a moving speed of the first communication apparatus relative to the second communication apparatus, or may be a moving speed of the first communication apparatus relative to the target reference point, or may be another implementation. This is not limited herein.

In a process in which the first communication apparatus sends the change rate of the information about the first TA, the first communication apparatus can determine, based on the speed of the first communication apparatus, the sending periodicity of the corresponding change rate of the information about the first TA in the at least two pieces of configuration information included in the fourth configuration information, and send the change rate of the information about the first TA.

Optionally, in a random access process, the first communication apparatus selects, in the fourth configuration information, a sending manner with a shortest sending periodicity (namely, a most frequent sending frequency) to send the change rate of the information about the first TA; and after the random access process, the first communication apparatus selects, in the fourth configuration information based on the speed of the first communication apparatus, an adapted sending periodicity to send the change rate of the information about the first TA.

S104: The second communication apparatus determines the TA between the first communication apparatus and the second communication apparatus based on the first information.

In this embodiment, the second communication apparatus determines the TA between the first communication apparatus and the second communication apparatus based on the first information received in step S103.

Specifically, in step S104, the second communication apparatus determines the TA between the second communication apparatus and the first communication apparatus based on the TA information that is between the first communication apparatus and the target reference point and that is indicated by the information about the first TA in the first information, and TA information between the second communication apparatus and the target reference point. In this implementation, in comparison with a manner in which the first communication apparatus reports the TA each time the TA changes, because a change rate of an offset indicated by the information about the first TA (for example, when the information about the first TA indicates a TA offset between the first communication apparatus and the target reference point) is less than a real change rate of the TA, reporting overheads of the TA can be greatly reduced in this manner (the problem 1 is avoided).

As described in step S102, the information about the first TA includes at least one of the following: the offset (denoted as a TA offset) between the first TA and the second TA; or the offset (denoted as a Koffset offset) between Koffset corresponding to the first TA and Koffset corresponding to the second TA. Correspondingly, in step 103, the information about the first TA in the first information sent by the first communication apparatus may include the TA offset or the Koffset offset. To reduce reporting overheads, the first communication apparatus does not need to report the complete information about the first TA. The following uses an example in which the information about the first TA includes the Koffset offset for description.

For example, the second communication apparatus broadcasts a cell-level or beam-level offset Koffset in advance (before step S103), and the first communication apparatus reports a differential value. For example, if the cell-level offset Koffset broadcast by the second communication apparatus is 28 slots, and the Koffset offset calculated by the first communication apparatus based on the TA is 25 slots, the first communication apparatus only needs to report a differential value "3". The second communication apparatus may calculate, based on the cell-level or beam-level offset Koffset and the Koffset differential value reported by the first communication apparatus, a real Koffset offset that needs to be reported by the first communication apparatus.

For example, in addition to reporting a differential value for a parameter broadcast by the second communication apparatus, the first communication apparatus may further report a differential value for a previous offset Koffset of the first communication apparatus. For example, if the cell-level offset Koffset broadcast by the second communication apparatus is 28 slots, and a Koffset offset calculated by the first communication apparatus based on the TA at the first reporting moment is 25 slots, the first communication apparatus reports a differential value "3". If a Koffset offset calculated by the first communication apparatus based on the TA at a next reporting moment is 26 slots, the first communication apparatus reports a differential value "-1", indicating that a differential value between the first communication apparatus and the broadcast offset Koffset is 3-1=2.

It is clear that in the foregoing implementation process, the Koffset offset is reported by using some known parameters, that is, the differential value is reported, so that signaling overheads can be further reduced (that is, the problem 1 is avoided).

In addition, as described in step S102, the information about the first TA specifically indicates the TA offset (or the Koffset offset) between the first TA and the second TA, and the TA types of the first TA and the second TA may include the service link side TA, and may further include the common link side TA. The reported information may be further simplified, so as to reduce resource consumption of the information about the first TA in the first information reported by the first communication apparatus in step S103. The following uses an example in which the information about the first TA includes the TA offset for description. The information about the first TA may specifically include the following implementations:
(1) If the first communication apparatus has a positioning capability (for example, a global satellite positioning system (global navigation satellite system, GNSS) capability), when reporting the TA offset, the first communication apparatus may report only a TA offset on a service link side, or report an offset corresponding to the TA offset of the service link.
(2) If the first communication apparatus has a positioning capability (for example, a GNSS capability), when reporting the TA offset, the first communication apparatus may report only a differential TA between a TA offset on a service link side and an orbital height or Koffset corresponding to the differential TA.
(3) When the first communication apparatus does not have a positioning capability (for example, a GNSS capability), the first communication apparatus cannot know a TA on a service link side, and the second communication apparatus broadcasts a common TA in a cell. For example, a minimum TA value in the cell is shared by all users. When reporting the TA offset, a user may report only a differential value between the TA offset and the common TA offset, or Koffset corresponding to the differential value.

It is clear that reporting overheads can be further reduced (that is, the problem 1 is avoided) by using the foregoing simplified process.

Optionally, when the first communication apparatus is in a static motion state, the first communication apparatus moves at a low speed, the first communication apparatus moves within a small range, or the first communication apparatus is in a similar case, the first communication apparatus may not need to update the target reference point in step S103, and only needs to report the first information including the information about the first TA, so that reporting overheads can be further reduced (that is, the problem 1 is avoided).

Optionally, the second communication apparatus may further receive, in step S103, the information that is about the target reference point and that is included in the first information, and use the information about the target reference point as one of bases for determining the TA between the first communication apparatus and the second communication apparatus in step S104. In this implementation, because the first communication apparatus reports only the information about the target reference point, but not the location information of the first communication apparatus, when the second communication apparatus determines the TA between the first communication apparatus and the second communication apparatus, a security problem and a privacy problem that are generated when the first communication apparatus reports the location information of the first communication apparatus are avoided (that is, the problem 2 is avoided).

In the embodiment shown in FIG. 3, the first information sent by the first communication apparatus includes the information that is about the first TA and that indicates the TA information between the first communication apparatus and the target reference point, so that the second communication apparatus receives the information about the first TA. Then, the second communication apparatus determines the TA between the first communication apparatus and the second communication apparatus based on the information about the first TA. Therefore, when the first communication apparatus and the second communication apparatus are located in the satellite communication system, the second communication apparatus determines the TA between the first communication apparatus and the second communication apparatus based on the TA information between the first communication apparatus and the target reference point, so as to determine TAs between different communication apparatuses in the satellite communication system.

FIG. 5 is another schematic diagram of a communication method according to an embodiment of this application. The method includes the following steps.

S201: A first communication apparatus determines a first TA parameter and a change rate of the first TA parameter. In this embodiment, the first communication apparatus determines the first TA parameter and the change rate of the first TA parameter in step S201, where the first TA parameter indicates a TA between the first communication apparatus and a second communication apparatus.

In a possible implementation, a length of valid duration of the change rate that is of the first TA parameter and that is determined by the first communication apparatus in step S201 is positively correlated with an absolute value of a first angle, where the first angle is a cell/beam elevation angle between the first communication apparatus and the second communication apparatus.

Optionally, a value range of the absolute value of the first angle is 0° to 90°. A relationship between the length of the valid duration of the change rate of the first TA parameter and the absolute value of the first angle may be described by using the examples shown in FIG. 4b and FIG. 4c. For details, refer to the foregoing descriptions. Details are not described herein again.

Specifically, the change rate of the first TA parameter is associated with a communication cell (for example, whether the first communication apparatus is located at a cell edge)/a communication beam (for example, whether the first communication apparatus is located at a beam edge) between the first communication apparatus and the second communication apparatus. A larger absolute value of the cell/beam elevation angle between the first communication apparatus and the second communication apparatus indicates a lower communication delay between the first communication apparatus and the second communication apparatus; and therefore, the valid duration of the change rate of the first TA parameter and that is sent by the first communication apparatus is longer. A smaller absolute value of the cell/beam elevation angle between the first communication apparatus and the second communication apparatus indicates a higher communication delay between the first communication apparatus and the second communication apparatus; and therefore, the valid duration of the change rate of the first TA parameter and that is sent by the first communication apparatus is shorter.

In addition, the first TA parameter may be implemented in a plurality of manners, including:
the first TA parameter includes a TA value between the first communication apparatus and the second communication apparatus;
the first TA parameter includes Koffest corresponding to a TA value between the first communication apparatus and the second communication apparatus;
the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment;
the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or
the first TA parameter includes a third differential value, and the third differential value indicates a difference between a common TA value between the first communication apparatus and the second communication apparatus and a TA value between the first communication apparatus and the second communication apparatus.

Based on the foregoing technical solution, the first TA parameter that is determined by the first communication apparatus in step S201 and that indicates the TA between the first communication apparatus and the second communication apparatus may be implemented in the foregoing plurality of manners, to improve flexibility of implementing the solution.

In a possible implementation, a TA type of the first TA parameter determined by the first communication apparatus in step S201 is a service link side TA. In a satellite communication process, the TA between the first communication apparatus and the second communication apparatus includes at least the service link side TA and a common link side TA. Because a value of the common link side TA is generally a value that can be obtained in advance by the second communication apparatus, an implementation in which the first communication apparatus sends only the service link side TA can enable the second communication apparatus to determine the TA between the first communication apparatus and the second communication apparatus, to reduce communication resource consumption and improve communication efficiency.

Optionally, the TA type of the first TA parameter includes the service link side TA and the common link side TA. S202: The first communication apparatus sends a first message, where the first message includes the first TA parameter and the change rate of the first TA parameter.

In this embodiment, the first communication apparatus sends, in step S202, the first TA parameter and the change rate of the first TA parameter that are determined in step S201. Correspondingly, the second communication apparatus receives, in step S202, the first TA parameter and the change rate of the first TA parameter.

In a possible implementation, a process in which the first communication apparatus sends the first message in step S202 specifically includes: The first communication apparatus first receives first configuration information, where the first configuration information is used for configuring a sending policy of the first message, and then the first communication apparatus sends the first message based on the first configuration information. Specifically, the first communication apparatus may send the change rate of the first TA parameter to the second communication apparatus based on the first configuration information from the second communication apparatus, so that the second communication apparatus subsequently receives the change rate of the first TA parameter according to the sending policy, and uses the change rate of the first TA parameter as one of bases for determining the TA between the first communication apparatus and the second communication apparatus.

Optionally, the first configuration information is carried in RRC, a MAC CE, DCI, or another message/signaling. This is not limited herein.

Optionally, the first configuration information is pre-configured in the first communication apparatus.

Specifically, the sending policy includes a sending periodicity of the change rate of the first TA parameter, the first configuration information includes at least two pieces of configuration information, and each of the at least two pieces of configuration information includes an association relationship between the sending periodicity of the change rate of the first TA parameter and a speed of the first communication apparatus. A process in which the first communication apparatus sends the change rate of the first TA parameter based on the first configuration information specifically includes: The first communication apparatus sends the change rate of the first TA parameter based on the speed of the first communication apparatus and the first configuration information.

It should be noted that the speed of the first communication apparatus may be a moving speed of the first communication apparatus relative to the ground, or may be a moving speed of the first communication apparatus relative to the second communication apparatus, or may be a moving speed of the first communication apparatus relative to a target reference point, or may be another implementation. This is not limited herein.

In the process in which the first communication apparatus sends the change rate of the first TA parameter, the first communication apparatus can determine, based on the speed of the first communication apparatus, the sending periodicity of the corresponding change rate of the first TA parameter in the at least two pieces of configuration information included in the first configuration information, and send the change rate of the first TA parameter. Further, the first configuration information is used for configuring a first sending frequency of the first message, and after that the first communication apparatus receives first configuration information, the method further includes: The first communication apparatus receives second configuration information, where the second configuration information is used for configuring a second sending frequency of the first message, and the first sending frequency is different from the second sending frequency. An update process may further exist for the configuration information used for configuring the sending policy of the first message. In this case, the first communication apparatus may receive the second configuration information used for updating the first configuration information, and send the first message based on the second sending frequency configured by using the updated second configuration information. Optionally, the second configuration information is carried in RRC, a MAC CE, DCI, or another message/signaling. This is not limited herein.

It should be noted that the plurality of pieces of configuration information in this embodiment include the first configuration information and the second configuration information, and the plurality of pieces of configuration information may be separately carried by using different messages, or the plurality of pieces of configuration information are carried by using a same message. This is not limited herein.

In addition, the first sending frequency configured by using the first configuration information is greater than the second sending frequency configured by using the second configuration information. Specifically, in time domain, a moment at which the first communication apparatus receives the first configuration information is before a moment at which the first communication apparatus receives the second configuration information. When the first communication apparatus accesses the second communication apparatus for the first time, the first communication apparatus sends the first message based on the larger first sending frequency, to ensure that the first communication apparatus accesses the second communication apparatus. Then, when a communication link between the first communication apparatus and the second communication apparatus is stable, the first communication apparatus sends the first message based on the smaller second sending frequency, to save communication resources.

Similarly, in a solution implementation process, as shown in FIG. 4a, based on a plurality of times of execution of step S202, to be specific, the second communication apparatus may infer, based on a TA corresponding to the first message reported by the first communication apparatus each time, a location range of the first communication apparatus (for example, in FIG. 4a, a possible location circle of a user when a TA is reported for the first time; a possible location circle of the user when a TA is reported for the second time; and a possible location circle of the user when a TA reported for the third time). Then, the second communication apparatus determines location information of the first communication apparatus (for example, the user location in FIG. 4a) based on the inferred location range of the first communication apparatus. In this case, for the static first communication apparatus or the first communication apparatus with a slow moving speed, after the second communication apparatus derives a location of the first communication apparatus, reporting of the TA may be reduced by using the second configuration information. Optionally, the second configuration information used for updating the first configuration information may indicate to update the sending policy indicated by the first configuration information, for example, increase/decrease the sending frequency of the first message, increase/decrease the sending periodicity of the first message, update the time domain resource carrying the first message, or update the frequency domain resource carrying the first message. This is not specifically limited herein. Specifically, the second configuration information may be adaptively configured based on a specific application scenario.

S203: The second communication apparatus determines the TA between the first communication apparatus and the second communication apparatus based on the first TA parameter and the change rate of the first TA parameter.

In this embodiment, in step S203, the second communication apparatus determines the TA between the first communication apparatus and the second communication apparatus based on the first TA parameter and the change rate of the first TA parameter that are received in step S202.

Specifically, in step S203, the second communication apparatus determines the TA between the second communication apparatus and the first communication apparatus based on the first TA parameter and the change rate of the first TA parameter. In this implementation, in comparison with a manner in which the first communication apparatus reports the TA each time the TA changes, because the change rate of the first TA parameter has specific valid duration, the first communication apparatus does not need to report the TA within the valid duration. This manner can reduce reporting overheads of the TA to some extent (the problem 1 is avoided).

As described in the foregoing step S201, the first TA parameter may be implemented in a plurality of manners. Correspondingly, in step 202, the first TA parameter in the first message sent by the first communication apparatus may include the plurality of manners, for example, the TA value, Koffest corresponding to the TA value, the first differential value, the second differential value, and the third differential value described in step S201. To reduce reporting overheads, the first communication apparatus does not need to report the complete first TA parameter. The following uses an example in which the first TA parameter includes Koffest (denoted as Koffest) corresponding to the TA value between the first communication apparatus and the second communication apparatus for description.

For example, the second communication apparatus broadcasts a cell-level or beam-level offset Koffset in advance (before step S202), and the first communication apparatus reports a differential value. For example, if the cell-level offset Koffset broadcast by the second communication apparatus is 28 slots, and the offset Koffset calculated by the first communication apparatus based on the TA is 25 slots, the first communication apparatus only needs to report a differential value "3". The second communication apparatus may calculate, based on the cell-level or beam-level offset Koffset and the Koffset differential value reported by the first communication apparatus, a real offset Koffset that needs to be reported by the first communication apparatus.

For example, in addition to reporting a differential value for a parameter broadcast by the second communication apparatus, the first communication apparatus may further report a differential value for a previous offset Koffset of the first communication apparatus. For example, if the cell-level offset Koffset broadcast by the second communication apparatus is 28 slots, and a Koffset calculated by the first communication apparatus based on the TA at the first reporting moment is 25 slots, the first communication apparatus reports a differential value "3". If a Koffset calculated by the first communication apparatus based on the TA at a next reporting moment is 26 slots, the first communication apparatus reports a differential value "-1", indicating that a differential value between the first communication apparatus and the broadcast offset Koffset is 3-1=2.

It is clear that in the foregoing implementation process, the Koffset is reported by using some known parameters, that is, the differential value is reported, so that signaling overheads can be further reduced (that is, the problem 1 is avoided).

In addition, as described in step S201, the TA type of the first TA parameter may include the service link side TA, and may further include the common link side TA. Resource consumption of the first TA parameter reported by the first communication apparatus in step S202 may be reduced by further simplifying the reported information. The following uses an example in which the first TA parameter includes the TA value (denoted as a TA value) between the first communication apparatus and the second communication apparatus for description. The first TA parameter may specifically include the following implementations:
(1) If the first communication apparatus has a positioning capability (for example, a global satellite positioning system (global navigation satellite system, GNSS) capability), when reporting the TA value, the first communication apparatus may report only a TA value on a service link side, or report an offset corresponding to the TA value of the service link.
(2) If the first communication apparatus has a positioning capability (for example, a GNSS capability), when reporting the TA value, the first communication apparatus may report only a differential TA between a TA value on a service link side and an orbital height or Koffset corresponding to the differential TA.
(3) When the first communication apparatus does not have a positioning capability (for example, a GNSS capability), the first communication apparatus cannot know a TA on a service link side, and the second communication apparatus broadcasts a common TA in a cell. For example, a minimum TA value in the cell is shared by all users. When reporting the TA value, a user may report only a differential value between the TA value and the common TA value, or Koffset corresponding to the differential value.

It is clear that reporting overheads can be further reduced (that is, the problem 1 is avoided) by using the foregoing simplified process.

In the embodiment shown in FIG. 5, the first message sent by the first communication apparatus includes the first TA parameter and the change rate of the first TA parameter, so that the second communication apparatus receives the first message. Then, the second communication apparatus determines the TA between the first communication apparatus and the second communication apparatus based on the first TA parameter and the change rate of the first TA parameter. Therefore, when the first communication apparatus and the second communication apparatus are located in the satellite communication system, the TA between the first communication apparatus and the second communication apparatus is determined based on the first TA parameter and the change rate of the first TA parameter that are sent by the first communication apparatus, so as to determine TAs between different communication apparatuses in the satellite communication system.

The foregoing describes this application from the perspective of the method, and the following describes apparatuses in this application.

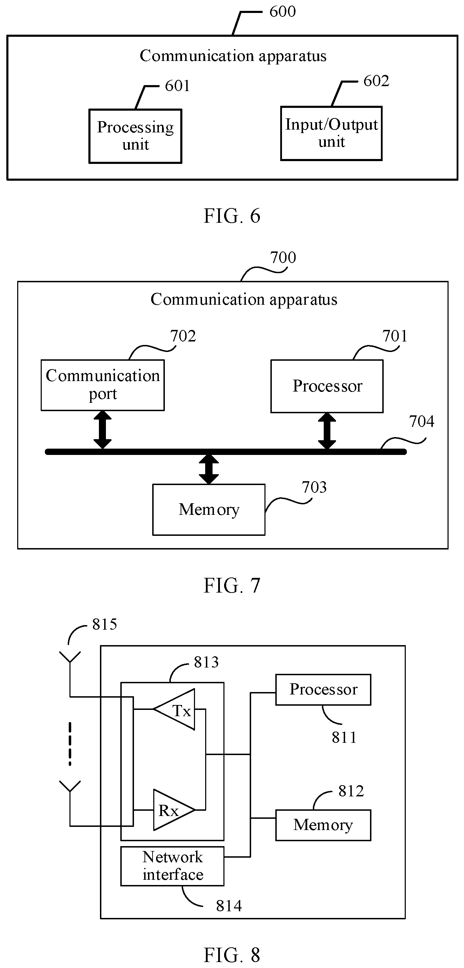

FIG. 6 is a schematic diagram of an implementation of a communication apparatus according to an embodiment of this application. The communication apparatus may specifically perform an implementation process related to the first communication apparatus or the second communication apparatus in any one of the foregoing embodiments.

As shown in FIG. 6, the communication apparatus 600 includes a processing unit 601 and an input/output unit 602. When the communication apparatus 600 is configured to implement an implementation process related to the first communication apparatus in the embodiment shown in FIG. 3, the processing unit 601 and the transceiver module 602 in the communication apparatus 600 are specifically configured to perform the following implementation process. The processing unit 601 is configured to determine a target reference point;
the processing unit 601 is further configured to determine information about a first timing advance TA, where the information about the first TA indicates TA information between the first communication apparatus and the target reference point; and
the input/output unit 602 is configured to send first information, where the first information includes the information about the first TA.

In a possible implementation,
the information about the first TA and information about the target reference point are carried in a first message, where the first message is a message 3 or a message A; or
the information about the first TA and the information about the target reference point are carried in different messages.

In a possible implementation, the first information further includes the information about the target reference point. In a possible implementation,
the input/output unit 602 is further configured to send a first request message, where the first request message is used to request to report the information about the target reference point; and
the input/output unit 602 is further configured to receive a first response message, where the first response message indicates that reporting of the information about the target reference point is allowed.

In a possible implementation, that the input/output unit 602 sends the first request message when at least one of the following conditions is satisfied includes:
a moving speed of the first communication apparatus is greater than a first threshold;
the first communication apparatus determines that beam switching occurs; or
the first communication apparatus determines that cell handover occurs.

In a possible implementation, the input/output unit 602 is specifically configured to:
receive first configuration information, where the first configuration information is used for configuring a sending policy of the first information; and
send the information about the target reference point based on the first configuration information.

In a possible implementation, when the moving speed of the first communication apparatus is greater than a second threshold, the input/output unit 602 is further configured to:
send a second request message, where the second request message is used to request to update the first configuration information; and
receive third configuration information, where the third configuration information is updated configuration information.

In a possible implementation, the sending policy includes at least one of a sending frequency of the first information, a sending periodicity of the first information, a time domain resource carrying the first information, and a frequency domain resource carrying the first information.

In a possible implementation,
the information about the target reference point is three-dimensional coordinate system information, longitude and latitude coordinate system information, or index information.

In a possible implementation,
the input/output unit 602 is further configured to receive second configuration information, where the second configuration information is used for configuring a set of reference points, and the set of reference points includes the target reference point.

In a possible implementation, the information about the first TA includes at least one of the following:
an offset between the first TA and a second TA, where the first TA is a TA between the first communication apparatus and the second communication apparatus, and the second TA is a TA between the target reference point and the second communication apparatus; or
an offset between Koffset corresponding to the first TA and Koffset corresponding to the second TA.

In a possible implementation, both a TA type of the first TA and a TA type of the second TA are service link side TAs. In a possible implementation, the input/output unit 602 is further configured to:
send a change rate of the information about the first TA.

In a possible implementation,
the information about the first TA and the change rate of the information about the first TA are carried in a second message; or
the information about the first TA and the change rate of the information about the first TA are carried in different messages.

In a possible implementation, a length of valid duration of the change rate of the information about the first TA is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation, the input/output unit 602 is specifically configured to:
receive fourth configuration information, where the fourth configuration information is used for configuring a sending policy of the change rate of the information about the first TA; and
send the change rate of the information about the first TA based on the fourth configuration information.

In a possible implementation, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus; and
the input/output unit 602 is specifically configured to:
send the change rate of the information about the first TA based on the speed of the first communication apparatus and the fourth configuration information.

When the communication apparatus 600 is configured to implement an implementation process related to the second communication apparatus in the embodiment shown in FIG. 3, the processing unit 601 and the transceiver module 602 in the communication apparatus 600 are specifically configured to perform the following implementation process. The input/output unit 602 is configured to receive first information, where the first information includes information about a first timing advance TA, and the information about the first TA indicates TA information between a first communication apparatus and a target reference point; and
the processing unit 601 is configured to determine a TA between the second communication apparatus and the first communication apparatus based on the first information.

In a possible implementation, the first information further includes information about the target reference point.

In a possible implementation,
the information about the first TA and information about the target reference point are carried in a first message, where the first message is a message 3 or a message A; or
the information about the first TA and the information about the target reference point are carried in different messages.

In a possible implementation,
the input/output unit 602 is further configured to receive a first request message, where the first request message is used to request to report the information about the target reference point; and
the input/output unit 602 is further configured to send a first response message, where the first response message indicates that reporting of the information about the target reference point is allowed.

In a possible implementation,
the input/output unit 602 is further configured to send first configuration information, where the first configuration information is used for configuring a sending policy of the first information.

In a possible implementation, the sending policy includes at least one of a sending frequency of the first information, a sending periodicity of the first information, a time domain resource carrying the first information, and a frequency domain resource carrying the first information.

In a possible implementation, the information about the target reference point is three-dimensional coordinate system information, longitude and latitude coordinate system information, or index information.

In a possible implementation,
the input/output unit 602 is further configured to send second configuration information, where the second configuration information is used for configuring a set of reference points, and the set of reference points includes the target reference point.

In a possible implementation, the information about the first TA includes at least one of the following:
an offset between the first TA and a second TA, where the first TA is a TA between the first communication apparatus and the second communication apparatus, and the second TA is a TA between the target reference point and the second communication apparatus; or
an offset between Koffset corresponding to the first TA and Koffset corresponding to the second TA.

In a possible implementation,
both a TA type of the first TA and a TA type of the second TA are service link side TAs.

In a possible implementation, the input/output unit 602 is further configured to:
receive a change rate of the information about the first TA.

In a possible implementation,
the information about the first TA and the change rate of the information about the first TA are carried in a second message, or
the information about the first TA and the change rate of the information about the first TA are carried in different messages.

In a possible implementation, a length of valid duration of the change rate of the information about the first TA is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation, the input/output unit 602 is specifically configured to:
send fourth configuration information, where the fourth configuration information is used for configuring a sending policy of the change rate of the information about the first TA.

In a possible implementation, the sending policy includes a sending periodicity of the change rate of the information about the first TA, the fourth configuration information includes at least two pieces of configuration information, and each of the at least two pieces of configuration information includes an association relationship between the sending periodicity of the change rate of the information about the first TA and a speed of the first communication apparatus. When the communication apparatus 600 is configured to implement an implementation process related to the first communication apparatus in the embodiment shown in FIG. 5, the processing unit 601 and the transceiver module 602 in the communication apparatus 600 are specifically configured to perform the following implementation process. The processing unit 601 is configured to determine a first timing advance TA parameter and a change rate of the first TA parameter, where the first TA parameter indicates a TA between the first communication apparatus and a second communication apparatus; and
the input/output unit 602 is configured to send a first message, where the first message includes the first TA parameter and the change rate of the first TA parameter.

In a possible implementation,
a length of valid duration of the change rate of the first TA parameter is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation, the input/output unit 602 is specifically configured to:
receive first configuration information, where the first configuration information is used for configuring a sending policy of the first message; and
send the first message based on the first configuration information.

In a possible implementation, the sending policy includes a sending periodicity of the change rate of the first TA parameter, the first configuration information includes at least two pieces of configuration information, and each of the at least two pieces of configuration information includes an association relationship between the sending periodicity of the change rate of the first TA parameter and a speed of the first communication apparatus; and
the input/output unit 602 is specifically configured to:
send the change rate of the first TA parameter based on the speed of the first communication apparatus and the first configuration information.

In a possible implementation, the input/output unit 602 is further configured to:
receive second configuration information, where the second configuration information is used for configuring a second sending frequency of the first message, and the first sending frequency is different from the second sending frequency.

In a possible implementation, the first sending frequency is greater than the second sending frequency.

In a possible implementation, the first TA parameter includes a TA value between the first communication apparatus and the second communication apparatus; or the first TA parameter includes Koffest corresponding to a TA value between the first communication apparatus and the second communication apparatus.

In a possible implementation,
the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment;
the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or
the first TA parameter includes a third differential value, and the third differential value indicates a difference between a common TA value between the first communication apparatus and the second communication apparatus and a TA value between the first communication apparatus and the second communication apparatus.

In a possible implementation,
a TA type of the first TA parameter is a service link side TA.

When the communication apparatus 600 is configured to implement an implementation process related to the second communication apparatus in the embodiment shown in FIG. 5, the processing unit 601 and the transceiver module 602 in the communication apparatus 600 are specifically configured to perform the following implementation process. The input/output unit 602 is configured to receive a first message, where the first message includes a first timing advance TA parameter and a change rate of the first TA parameter, and the first TA parameter indicates a TA between a first communication apparatus and the second communication apparatus; and
the processing unit 601 is configured to determine the TA between the first communication apparatus and the second communication apparatus based on the first message.

In a possible implementation,
a length of valid duration of the change rate of the first TA parameter is positively correlated with an absolute value of a first angle, where the first angle is a cell/beam elevation angle between the first communication apparatus and the second communication apparatus.

Optionally, a value range of the absolute value of the first angle is 0° to 90°.

In a possible implementation, the input/output unit 602 is further configured to:
send first configuration information, where the first configuration information is used for configuring a sending policy of the first message.

In a possible implementation, the sending policy includes a sending periodicity of the change rate of the information about the first TA, the first configuration information includes at least two pieces of configuration information, and each of the at least two pieces of configuration information includes an association relationship between the sending periodicity of the change rate of the information about the first TA and a speed of the first communication apparatus; and

In a possible implementation, the input/output unit 602 is further configured to:
send second configuration information to the first communication apparatus, where the second configuration information is used for configuring a second sending frequency of the first message, and the first sending frequency is different from the second sending frequency.

In a possible implementation, the first sending frequency is greater than the second sending frequency.

In a possible implementation, the first TA parameter includes a TA value between the first communication apparatus and the second communication apparatus; or the first TA parameter includes Koffest corresponding to a TA value between the first communication apparatus and the second communication apparatus.

In a possible implementation,
the first TA parameter includes a first differential value, and the first differential value indicates a difference between a TA between the first communication apparatus and the second communication apparatus at a first moment and a TA between the first communication apparatus and the second communication apparatus at a second moment, where in time domain, the second moment is after the first moment;
the first TA parameter includes a second differential value, and the second differential value indicates a difference between Koffest corresponding to a TA between the first communication apparatus and the second communication apparatus at a first moment and Koffest corresponding to a TA between the first communication apparatus and the second communication apparatus at a second moment; or
the first TA parameter includes a third differential value, and the third differential value indicates a difference between a common TA value between the first communication apparatus and the second communication apparatus and a TA value between the first communication apparatus and the second communication apparatus.

In a possible implementation,
a TA type of the first TA parameter is a service link side TA.

It should be noted that for specific content such as an information execution process of the units of the communication apparatus 600, refer to descriptions in the foregoing method embodiments of this application. Details are not described herein again.

FIG. 7 is a communication apparatus in the foregoing embodiment according to embodiments of this application. The communication apparatus may be specifically the first communication apparatus (namely, a terminal device) in the foregoing embodiments. FIG. 7 is a schematic diagram of a possible logical structure of the communication apparatus 700. The communication apparatus 700 may include but is not limited to at least one processor 701 and a communication port 702. Further, optionally, the apparatus may further include at least one of a memory 703 and a bus 704. In this embodiment of this application, the at least one processor 701 is configured to control an action of the communication apparatus 700.

In addition, the processor 701 may be a central processing unit, a general-purpose processor, a digital signal processor, an application-specific integrated circuit, a field programmable gate array, another programmable logic device, a transistor logic device, a hardware component, or any combination thereof. The processor 701 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It can be clearly understood by a person skilled in the art that, for a purpose of convenient and brief description, for detailed working processes of the foregoing system, apparatus, and unit, refer to corresponding processes in the foregoing method embodiments. Details are not described herein again.

It should be noted that, the communication apparatus shown in FIG. 7 may be specifically configured to implement other steps implemented by the first communication apparatus (namely, the terminal device) in the foregoing corresponding method embodiments, and implement technical effects corresponding to the terminal device. For a specific implementation of the communication apparatus shown in FIG. 7, refer to the descriptions in the foregoing method embodiments. Details are not described herein again.

FIG. 8 is a schematic diagram of a structure of a communication apparatus in the foregoing embodiment according to embodiments of this application. The communication apparatus may be specifically the second communication apparatus (namely, a network device) in the foregoing embodiments. For a structure of the communication apparatus, refer to the structure shown in FIG. 8.

The communication apparatus includes at least one processor 811 and at least one network interface 814. Further, optionally, the communication apparatus further includes at least one memory 812, at least one transceiver 813, and one or more antennas 815. The processor 811, the memory 812, the transceiver 813, and the network interface 814 are connected, for example, through a bus. In this embodiment of this application, the connection may include various interfaces, transmission lines, buses, or the like. This is not limited in this embodiment. The antenna 815 is connected to the transceiver 813. The network interface 814 is configured to enable the communication apparatus to communicate with another communication device through a communication link. For example, the network interface 814 may include a network interface between the communication apparatus and a core network device, for example, an S 1 interface. The network interface may include a network interface between the communication apparatus and another communication apparatus (for example, another network device or a core network device), for example, an X2 or Xn interface.

The processor 811 is mainly configured to process a communication protocol and communication data, control the entire communication apparatus, execute a software program, and process data of the software program, for example, is configured to support the communication apparatus in performing actions described in the embodiments. The communication apparatus may include a baseband processor and a central processing unit. The baseband processor is mainly configured to process a communication protocol and communication data. The central processing unit is mainly configured to control the entire terminal device, execute software program, and process data of the software program. Functions of the baseband processor and the central processing unit may be integrated into the processor 811 in FIG. 8. A person skilled in the art may understand that the baseband processor and the central processing unit each may be independent processors, and are interconnected by using a technology such as a bus. A person skilled in the art can understand that the terminal device may include a plurality of baseband processors to adapt to different network standards, the terminal device may include a plurality of central processing units to improve a processing capability of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of a software program, and the processor executes the software program to implement a baseband processing function.

The memory is mainly configured to store the software program and data. The memory 812 may exist independently, and is connected to the processor 811. Optionally, the memory 812 may alternatively be integrated with the processor 811. For example, the memory 812 and the processor 811 are integrated into one chip. The memory 812 can store program code for executing the technical solution in embodiments of this application, and the processor 811 controls execution of the program code. Various types of executed computer program code may also be considered as drivers of the processor 811.

FIG. 8 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or may be an independent storage element. This is not limited in this embodiment of this application.

The transceiver 813 may be configured to support receiving or sending of a radio frequency signal between the communication apparatus and a terminal, and the transceiver 813 may be connected to the antenna 815. The transceiver 813 includes a transmitter Tx and a receiver Rx. Specifically, the one or more antennas 815 may receive a radio frequency signal. The receiver Rx in the transceiver 813 is configured to: receive the radio frequency signal from the antenna, convert the radio frequency signal into a digital baseband signal or a digital intermediate frequency signal, and provide the digital baseband signal or the digital intermediate frequency signal for the processor 811, so that the processor 811 further processes the digital baseband signal or the digital intermediate frequency signal, for example, performs demodulation processing and decoding processing. In addition, the transmitter Tx in the transceiver 813 is further configured to: receive a modulated digital baseband signal or digital intermediate frequency signal from the processor 811, convert the modulated digital baseband signal or digital intermediate frequency signal into a radio frequency signal, and send the radio frequency signal through the one or more antennas 815. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as digital signals.

The transceiver may also be referred to as an input/output unit, a transceiver, a transceiver apparatus, or the like. Optionally, a component configured to implement a receiving function in the input/output unit may be considered as a receiving unit, and a component configured to implement a sending function in the input/output unit may be considered as a sending unit. In other words, the input/output unit includes the receiving unit and the sending unit. The receiving unit may also be referred to as a receiver, an input port, a receiver circuit, or the like. The sending unit may be referred to as a transmitter, a transmitter machine, a transmitter circuit, or the like.

It should be noted that, the communication apparatus shown in FIG. 8 may be specifically configured to implement the steps implemented by the second communication apparatus (namely, the network device) in the foregoing corresponding method embodiments, and implement technical effects corresponding to the network device. For a specific implementation of the communication apparatus shown in FIG. 8, refer to the descriptions in the foregoing method embodiments. Details are not described herein again.

An embodiment of this application further provides a computer-readable storage medium that stores one or more computer-executable instructions. When the computer-executable instruction is executed by a processor, the processor performs the method described in the possible implementation of the first communication apparatus (when being implemented by using a terminal device) in the foregoing embodiments.

An embodiment of this application further provides a computer-readable storage medium that stores one or more computer-executable instructions. When the computer-executable instruction is executed by a processor, the processor performs the method described in the possible implementation of the second communication apparatus (when being implemented by using a network device) in the foregoing embodiments.

An embodiment of this application further provides a computer program product (or referred to as a computer program) that stores one or more computer program instructions. When the computer program product is executed by a processor, the processor performs the method in the possible implementation of the first communication apparatus (when being implemented by using a terminal device).

An embodiment of this application further provides a computer program product that stores one or more computer program instructions. When the computer program product is executed by a processor, the processor performs the method in the possible implementation of the second communication apparatus (when being implemented by using a network device).

An embodiment of this application further provides a chip system. The chip system includes at least one processor, configured to support a terminal device in implementing a function in the foregoing possible implementation of the first communication apparatus (when being implemented by using a terminal device). Optionally, the chip system further includes an interface circuit, and the interface circuit provides the program instructions and/or the data for the at least one processor. In a possible design, the chip system may further include a memory. The memory is configured to store program instructions and data that are necessary for a terminal device. The chip system may include a chip; or may include a chip and another discrete component.

An embodiment of this application further provides a chip system. The chip system includes at least one processor, configured to support a network device in implementing a function in the foregoing possible implementation of the second communication apparatus (when being implemented by using a network device). Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip; or may include a chip and another discrete component. The network device may be specifically the network device in the foregoing method embodiments.

An embodiment of this application further provides a communication system. An architecture of the network system includes the first communication apparatus and the second communication apparatus (namely, the terminal device and the network device) in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes various media that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. The extent of protection conferred by this application is determined by the appended claims.

## Claims

1. A communication method, applied to a first communication apparatus that is a terminal device or a component of the terminal device, comprising:
determining (S101) a target reference point, wherein the target reference point is a virtual reference point that is determined by the first communication apparatus based on a pre-configuration determining manner and that is a specific distance from the location of the first communication apparatus;
determining (S102) information about a first timing advance, TA, wherein the information about the first TA indicates TA information between the first communication apparatus and the target reference point; and
sending (S103) first information, wherein the first information comprises the information about the first TA **characterized in that** the first information further comprises information about the target reference point.

2. The method according to claim 1, wherein before sending the information about the target reference point, the method further comprises:
sending a first request message, wherein the first request message is used to request to report the information about the target reference point; and
receiving a first response message, wherein the first response message indicates that reporting of the information about the target reference point is allowed.

3. The method according to any one of claims 1 to 2, wherein the sending first information comprises:
receiving first configuration information, wherein the first configuration information is used for configuring a sending policy of the first information; and
sending the first information based on the first configuration information.

4. The method according to claim 3, wherein the sending policy comprises at least one of a sending frequency of the first information, a sending periodicity of the first information, a time domain resource carrying the first information, and a frequency domain resource carrying the first information.

5. The method according to any one of claims 1 to 4, wherein the information about the target reference point is three-dimensional coordinate system information, longitude and latitude coordinate system information, or index information.

6. The method according to any one of claims 1 to 5, wherein before the determining a target reference point, the method further comprises:
receiving second configuration information, wherein the second configuration information is used for configuring a set of reference points, and the set of reference points comprises the target reference point.

7. The method according to any one of claims 1 to 6, wherein the information about the first TA comprises at least one of the following:
an offset between the first TA and a second TA, wherein the first TA is a TA between the first communication apparatus and a network device, and the second TA is a TA between the target reference point and the second network device; or
an offset between Koffset corresponding to the first TA and Koffset corresponding to the second TA.

8. The method according to claim 7, wherein both a TA type of the first TA and a TA type of the second TA are service link side TAs.

9. A communication method, applied to a second communication apparatus that is a network device or a component of the network device, comprising:
receiving (S103), by a second communication apparatus, first information, wherein the first information comprises information about a first timing advance, wherein the information about the first TA indicates TA information between a terminal device and a target reference point, the target reference point is a virtual reference point that is determined by the first communication apparatus based on a pre-configuration determining manner and that is a specific distance from the location of the terminal device; and
determining (S104), by the second communication apparatus, a TA between the second communication apparatus and the terminal device based on the first information
**characterized in that** the first information further comprises information about the target reference point.

10. A communication apparatus, comprising at least one memory and at least one processor, wherein the at least one memory comprises instructions which, when executed by the at least one processor, cause the at least on processor to perform the method according to any one of claim 1 to 9.

11. A computer-readable storage medium, wherein the medium stores instructions which, when executed by a computer, cause the computer to perform the method according to any one of claims 1 to 9.

12. A computer program product, comprising instructions which, when executed by a computer, cause the computer to perform the method according to any one of claims 1 to 9.

13. A communication system, wherein the system comprises: a first communication apparatus configured to perform the method according to any one of claims 1 to 8, and a second communication apparatus configured to perform the method according to claim 9.

## Patentansprüche

1. Kommunikationsverfahren, das auf eine erste Kommunikationsvorrichtung angewendet wird, bei der es sich um ein Endgerät oder um eine Komponente des Endgeräts handelt, umfassend:
Bestimmen (S101) eines Zielbezugspunkts, wobei der Zielbezugspunkt ein virtueller Bezugspunkt ist, der durch die erste Kommunikationsvorrichtung basierend auf einer Vorkonfigurations-Bestimmungsart bestimmt wird und bei dem es sich um einen spezifischen Abstand vom Standort der ersten Kommunikationsvorrichtung handelt;
Bestimmen (S102) von Informationen über einen ersten Zeitvorlauf, TA, wobei die Informationen über den ersten TA TA-Informationen zwischen der ersten Kommunikationsvorrichtung und dem Zielbezugspunkt angeben; und
Senden (S103) erster Informationen, wobei die ersten Informationen die Informationen über den ersten TA umfassen, **dadurch gekennzeichnet, dass** die ersten Informationen ferner Informationen über den Zielbezugspunkt umfassen.

2. Verfahren nach Anspruch 1, wobei das Verfahren vor dem Senden der Informationen über den Zielbezugspunkt ferner Folgendes umfasst:
Senden einer ersten Anforderungsnachricht, wobei die erste Anforderungsnachricht dazu verwendet wird, Melden der Informationen über den Zielbezugspunkt anzufordern; und
Empfangen einer ersten Antwortnachricht, wobei die erste Antwortnachricht angibt, dass das Melden der Informationen über den Zielbezugspunkt zulässig ist.

3. Verfahren nach einem der Ansprüche 1 bis 2, wobei das Senden erster Informationen Folgendes umfasst:
Empfangen erster Konfigurationsinformationen, wobei die ersten Konfigurationsinformationen zum Konfigurieren eine Senderichtlinie der ersten Informationen verwendet werden; und
Senden der ersten Informationen basierend auf den ersten Konfigurationsinformationen.

4. Verfahren nach Anspruch 3, wobei die Senderichtlinie mindestens eines aus einer Sendefrequenz der ersten Informationen, einer Sendeperiodizität der ersten Informationen, einer Zeitdomänenressource, die die ersten Informationen enthält, und einer Frequenzdomänenressource, die die ersten Informationen enthält, umfasst.

5. Verfahren nach einem der Ansprüche 1 bis 4, wobei es sich bei den Informationen über den Zielbezugspunkt um Informationen eines dreidimensionalen Koordinatensystems, Informationen eines Längen- und Breitenkoordinatensystems oder Indexinformationen handelt.

6. Verfahren nach einem der Ansprüche 1 bis 5, wobei das Verfahren vor dem Bestimmen eines Zielbezugspunkts ferner Folgendes umfasst:
Empfangen zweiter Konfigurationsinformationen, wobei die zweiten Konfigurationsinformationen zum Konfigurieren eines Satzes von Bezugspunkten verwendet werden und der Satz von Bezugspunkten den Zielbezugspunkt umfasst.

7. Verfahren nach einem der Ansprüche 1 bis 6, wobei die Informationen über den ersten TA mindestens eines der Folgenden umfassen:
ein Offset zwischen dem ersten TA und einem zweiten TA, wobei der erste TA ein TA zwischen der ersten Kommunikationsvorrichtung und einem Netzwerkgerät ist und der zweite TA ein TA zwischen dem Zielbezugspunkt und dem zweiten Netzwerkgerät ist; oder
ein Offset zwischen Koffset, das dem ersten TA entspricht, und Koffset, das dem zweiten TA entspricht.

8. Verfahren nach Anspruch 7, wobei sowohl ein TA-Typ des ersten TA als auch ein TA-Typ des zweiten TA dienstverbindungsseitige TAs sind.

9. Kommunikationsverfahren, das auf eine zweite Kommunikationsvorrichtung angewendet wird, bei der es sich um ein Netzwerkgerät oder eine Komponente des Netzwerkgeräts handelt, umfassend:
Empfangen (S103), durch eine zweite Kommunikationsvorrichtung, erster Informationen, wobei die ersten Informationen Informationen über einen ersten Zeitvorlauf umfassen, wobei die Informationen über den ersten TA TA-Informationen zwischen einem Endgerät und einem Zielbezugspunkt angeben, wobei der Zielbezugspunkt ein virtueller Bezugspunkt ist, der durch die erste Kommunikationsvorrichtung basierend auf einer Vorkonfigurations-Bestimmungsart bestimmt wird und bei dem es sich um einen spezifischen Abstand vom Standort des Endgeräts handelt; und
Bestimmen (S104), durch die zweite Kommunikationsvorrichtung, eines TA zwischen der zweiten Kommunikationsvorrichtung und dem Endgerät basierend auf den ersten Informationen, **dadurch gekennzeichnet, dass** die ersten Informationen ferner Informationen über den Zielbezugspunkt umfassen.

10. Kommunikationsvorrichtung, umfassend mindestens einen Speicher und mindestens einen Prozessor, wobei der mindestens eine Speicher Anweisungen umfasst, die, wenn sie durch den mindestens einen Prozessor ausgeführt werden, den mindestens einen Prozessor dazu veranlassen, das Verfahren nach einem der Ansprüche 1 bis 9 durchzuführen.

11. Computerlesbares Speichermedium, wobei das Medium Anweisungen speichert, die, wenn sie durch einen Computer ausgeführt werden, den Computer dazu veranlassen, das Verfahren nach einem der Ansprüche 1 bis 9 durchzuführen.

12. Computerprogrammprodukt, umfassend Anweisungen, die, wenn sie durch einen Computer ausgeführt werden, den Computer dazu veranlassen, das Verfahren nach einem der Ansprüche 1 bis 9 durchzuführen.

13. Kommunikationssystem, wobei das System Folgendes umfasst: eine erste Kommunikationsvorrichtung, die dazu konfiguriert ist, das Verfahren nach einem der Ansprüche 1 bis 8 durchzuführen, und eine zweite Kommunikationsvorrichtung, die dazu konfiguriert ist, das Verfahren nach Anspruch 9 durchzuführen.

## Revendications

1. Procédé de communication, appliqué à un premier appareil de communication qui est un dispositif terminal ou un composant du dispositif terminal, comprenant :
la détermination (S101) d'un point de référence cible, dans lequel le point de référence cible est un point de référence virtuel qui est déterminé par le premier appareil de communication sur la base d'une méthode de détermination de préconfiguration et qui se trouve à une distance spécifique de l'emplacement du premier appareil de communication ;
la détermination (S102) d'informations sur une première avance de synchronisation, TA, dans lequel les informations sur la première TA indiquent les informations TA entre le premier appareil de communication et le point de référence cible ; et
l'envoi (S103) de premières informations, dans lequel les premières informations comprennent les informations sur la première TA **caractérisé en ce que** les premières informations comprennent en outre des informations sur le point de référence cible.

2. Procédé selon la revendication 1, dans lequel avant l'envoi des informations sur le point de référence cible, le procédé comprend en outre :
l'envoi d'un premier message de demande, dans lequel le message de demande est utilisé pour demander la communication des informations sur le point de référence cible ; et
la réception d'un premier message de réponse, dans lequel le premier message de réponse indique que la communication des informations sur le point de référence cible est autorisée.

3. Procédé selon l'une quelconque des revendications 1 et 2, dans lequel l'envoi de premières informations comprend :
la réception de premières informations de configuration, dans lequel les premières informations de configuration sont utilisées pour configurer une politique d'envoi des premières informations ; et
l'envoi des premières informations sur la base des premières informations de configuration.

4. Procédé selon la revendication 3, dans lequel la politique d'envoi comprend au moins l'une d'une fréquence d'envoi des premières informations, d'une périodicité d'envoi des premières informations, d'une ressource de domaine temporel transportant les premières informations et d'une ressource de domaine fréquentiel transportant les premières informations.

5. Procédé selon l'une quelconque des revendications 1 à 4, dans lequel les informations sur le point de référence cible sont des informations de système de coordonnées tridimensionnelles, des informations de système de coordonnées de longitude et de latitude ou des informations d'index.

6. Procédé selon l'une quelconque des revendications 1 à 5, dans lequel avant la détermination d'un point de référence cible, le procédé comprend en outre :
la réception de secondes informations de configuration, dans lequel les secondes informations de configuration sont utilisées pour configurer un ensemble de points de référence, et l'ensemble de points de référence comprend le point de référence cible.

7. Procédé selon l'une quelconque des revendications 1 à 6, dans lequel les informations sur la première TA comprennent au moins l'un des éléments suivants :
un décalage entre la première TA et une seconde TA, dans lequel la première TA est une TA entre le premier appareil de communication et un dispositif réseau, et la seconde TA est une TA entre le point de référence cible et le second dispositif réseau ; ou
un décalage entre Koffset correspondant à la première TA et Koffset correspondant à la seconde TA.

8. Procédé selon la revendication 7, dans lequel les deux d'un type TA de la première TA et d'un type TA de la seconde TA sont des TA côté liaison de service.

9. Procédé de communication, appliqué à un second appareil de communication qui est un dispositif réseau ou un composant du dispositif réseau, comprenant :
la réception (S103), par un second appareil de communication, de premières informations, dans lequel les premières informations comprennent des informations sur une première avance de synchronisation, dans lequel les informations sur la première TA indiquent des informations TA entre un dispositif terminal et un point de référence cible, le point de référence cible est un point de référence virtuel qui est déterminé par le premier appareil de communication sur la base d'une méthode de détermination préconfigurée et qui se trouve à une distance spécifique de l'emplacement du dispositif terminal ; et
la détermination (S104), par le second appareil de communication, d'une TA entre le second appareil de communication et le dispositif terminal sur la base des premières informations **caractérisé en ce que** les premières informations comprennent en outre des informations sur le point de référence cible.

10. Appareil de communication, comprenant au moins une mémoire et au moins un processeur, dans lequel l'au moins une mémoire comprend des instructions qui, lorsqu'elles sont exécutées par l'au moins un processeur, amènent l'au moins un processeur à mettre en œuvre le procédé selon l'une quelconque des revendications 1 à 9.

11. Support de stockage lisible par ordinateur, dans lequel le support stocke des instructions qui, lorsqu'elles sont exécutées par un ordinateur, amènent l'ordinateur à mettre en œuvre le procédé selon l'une quelconque des revendications 1 à 9.

12. Produit de programme informatique, comprenant des instructions qui, lorsqu'elles sont exécutées par un ordinateur, amènent l'ordinateur à mettre en œuvre le procédé selon l'une quelconque des revendications 1 à 9.

13. Système de communication, dans lequel le système comprend : un premier appareil de communication configuré pour mettre en œuvre le procédé selon l'une quelconque des revendications 1 à 8 et un second appareil de communication configuré pour mettre en œuvre le procédé selon la revendication 9.
